# EUROPEAN PATENT SPECIFICATION

(11) **EP 4 456 619 B1**
(45) Date of publication and mention of the grant of the patent: **28.10.2026**
(21) Application number: 22917944.5
(22) Date of filing: 10.01.2022
(51) Int. Cl.: H04B 7/185, H04W 56/00

(54) **WIRELESS COMMUNICATION METHOD AND APPARATUS, AND DEVICE, STORAGE MEDIUM AND PROGRAM PRODUCT**
DRAHTLOSKOMMUNIKATIONSVERFAHREN UND -VORRICHTUNG SOWIE VORRICHTUNG, SPEICHERMEDIUM UND PROGRAMMPRODUKT
PROCÉDÉ ET APPAREIL DE COMMUNICATION SANS FIL, DISPOSITIF, SUPPORT DE STOCKAGE ET PRODUIT-PROGRAMME

(43) Date of publication of application: 30.10.2024
(73) Proprietor: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN); LI, Haitao, Dongguan, Guangdong 523860 (CN); HU, Yi, Dongguan, Guangdong 523860 (CN); ZHANG, Jinyu, Dongguan, Guangdong 523860 (CN); MA, Dongjun, Dongguan, Guangdong 523860 (CN); ZHAO, Nande, Dongguan, Guangdong 523860 (CN); HU, Rongyi, Dongguan, Guangdong 523860 (CN); YU, Xinlei, Dongguan, Guangdong 523860 (CN)
(74) Representative: Novagraaf Technologies
(86) International application number: PCT/CN2022/071123
(87) International publication number: WO 2023/130474

(56) References cited:
- EP-A1- 4 451 793
- WO-A1-2021/232412
- WO-A1-2023/081552
- CN-A- 111 867 041
- CN-A- 112 911 699
- CN-A- 113 347 697
- CN-A- 113 518 417
- RAN WG4: "LS on NR NTN Neighbor Cell and Satellite Information", vol. RAN WG4, no. Electronic Meeting; 20211101 - 20211112, 11 November 2021 (2021-11-11), XP052076186, Retrieved from the Internet <URL:https://ftp.3gpp.org/tsg_ran/WG4_Radio/TSGR4_101-e/Inbox/R4-2120309.zip R4-2120309 LS on NR NTN Neighbor Cell and Satellite Information.docx> [retrieved on 20211111]
- ZTE ET AL: "Discussion on NB-IoT and eMTC Support for NTN", vol. RAN WG3, no. Online; 20220117 - 20220126, 7 January 2022 (2022-01-07), XP052099443, Retrieved from the Internet <URL:https://ftp.3gpp.org/tsg_ran/WG3_Iu/TSGR3_114bis-e/Docs/R3-220982.zip R3-220982 Discussion on NB-IoT and eMTC Support for NTN.doc> [retrieved on 20220107]
- HUAWEI ET AL: "Discussion on UL time and frequency synchronization enhancement for NTN", vol. RAN WG1, no. e-Meeting; 20211111 - 20211119, 6 November 2021 (2021-11-06), XP052074586, Retrieved from the Internet <URL:https://ftp.3gpp.org/tsg_ran/WG1_RL1/TSGR1_107-e/Docs/R1-2110805.zip R1-2110805.docx> [retrieved on 20211106]

## Description

### TECHNICAL FIELD

Embodiments of the present disclosure relate to the technical field of communications, and in particular, to a method and apparatus for wireless communication.

### BACKGROUND

In a non-terrestrial network (NTN), a terminal device needs to acquire synchronization assistance information of a serving satellite to complete time-domain and/or frequency-domain synchronization with the serving satellite, such that the terminal device is capable of normally communicating with a serving cell. Mobility management and a handover procedure in an NTN system need to be further researched.

XP052076186 raises questions such as if sets of parameters are relevant to NTN UE measurement and mobility and whether those will be provided to UE by a serving cell.

XP052099443 discloses that some agreements for NR NTN have been reached. The serving satellite Ephemeris parameters should be also supported for IoT over NTN.

XP052074586 discuss the issue of UL time and frequency synchronization enhancement for NTN, some observations and proposals are presented.

WO 2023/081552 A1 constitutes background art under Art. 54(3) EPC and discloses a wireless communication system whereby, in some aspects, a user equipment (UE) may receive, from a source base station, configuration information for a handover, wherein the configuration information indicates, for a target non-terrestrial cell, timing and synchronization parameters including a scheduling timing offset, a round trip time between a reference point and a target base station associated with the target non-terrestrial cell, satellite ephemeris information, an ephemeris validity duration associated with the satellite ephemeris information, common timing advance parameters, and a common timing advance validity duration associated with the common timing advance parameters. The UE may perform the handover with the target base station associated with the target non-terrestrial cell based at least in part on the timing and synchronization parameters for the target non-terrestrial cell. Numerous other aspects are described.

### SUMMARY

Embodiments of the present disclosure provide a method and apparatus for wireless communication. The technical solutions are as follows.

According to some embodiments of the present disclosure, a method for wireless communication is provided as defined in claim 1.

According to some embodiments of the present disclosure, a method for wireless communication is provided as defined in claim 5.

According to some embodiments of the present disclosure, an apparatus for wireless communication is provided as defined in claim 10.

According to some embodiments of the present disclosure, a system for wireless communication is provided as defined in claim 14.

### BRIEF DESCRIPTION OF DRAWINGS

FIG. 1 is a schematic diagram of an architecture of a communication system according to some embodiments of the present disclosure;
FIG. 2 is a schematic diagram of an architecture of a communication system according to another embodiment of the present disclosure;
FIG. 3 is a schematic diagram of an architecture of a communication system according to another embodiment of the present disclosure;
FIG. 4 is a schematic diagram of parameters included in satellite ephemeris information according to some embodiments of the present disclosure;
FIG. 5 is a flowchart of a method for wireless communication according to some embodiments of the present disclosure;
FIG. 6 is a block diagram of an apparatus for wireless communication according to some embodiments of the present disclosure;
FIG. 7 is a block diagram of an apparatus for wireless communication according to another embodiment of the present disclosure;
FIG. 8 is a schematic structural diagram of a terminal device according to some embodiments of the present disclosure; and
FIG. 9 is a schematic structural diagram of a network device according to some embodiments of the present disclosure.

### DETAILED DESCRIPTION

For clearer descriptions of the objects, technical solutions, and advantages of the present disclosure, implementations of the present disclosure are further described in detail below with reference to the accompanying drawings.

Prior to description of the technical solutions of the present disclosure, some background technical knowledge involved in the present disclosure is first described. The following related technologies, as optional solutions, may be arbitrarily combined with the technical solutions according to the embodiments of the present disclosure, and all fall within the protection scope of the embodiments of the present disclosure. The embodiments of the present disclosure include at least part of following content.

### 1. Related content of an NTN

Currently, the 3rd Generation Partnership Project (3GPP) is researching the NTN technology. The NTN generally provides communication services for terrestrial users by satellite communications. An NTN system currently includes a new radio (NR)-NTN system and an Internet of things (IoT)-NTN system. The IoT-NTN system includes at least a narrowband (NB)-IoT-NTN system and an enhanced machine type communication (eMTC)-NTN system. In some cases, in the NR-NTN system, a network device may be a next-generation Node B (gNB). In an NTN system based on long term evolution (LTE), the network device may be an evolved Node B (eNB).

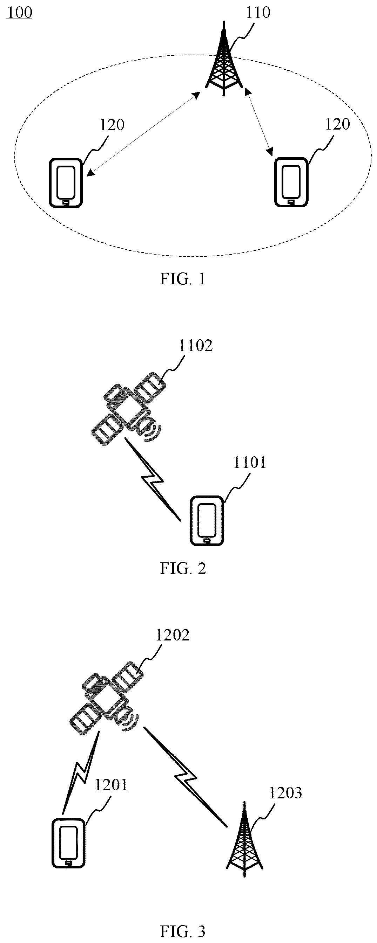

Exemplarily, FIG. 1 is a schematic diagram of an architecture of a communication system 100 according to some embodiments of the present disclosure. As shown in FIG. 1, the communication system 100 includes a network device 110. The network device 110 may be a device that communicates with a terminal device 120 (which is alternatively referred to as a communication terminal or a terminal). The network device 110 provides communication coverage for a specific geographical region and communicates with the terminal device 120 within the coverage region.

FIG. 1 exemplarily shows one network device and two terminal devices. In some embodiments of the present disclosure, the communication system 100 includes a plurality of network devices, and within the coverage of each of the network devices, another number of terminal devices may use network services provided by the network device, which is not limited in the embodiments of the present disclosure.

Exemplarily, FIG. 2 is a schematic diagram of an architecture of another communication system according to some embodiments of the present disclosure. Referring to FIG. 2, the communication system includes a terminal device 1101 and a satellite 1102. Wireless communication may be carried out between the terminal device 1101 and the satellite 1102. A network formed between the terminal device 1101 and the satellite 1102 may also be referred to as an NTN. In the architecture of the communication system shown in FIG. 2, the satellite 1102 functions as a base station, and the terminal device 1101 may directly communicate with the satellite 1102. In the system architecture, the satellite 1102 may be referred to as a network device. In some embodiments of the present disclosure, the communication system includes a plurality of network devices 1102, and within the coverage of each of the network devices 1102, another number of terminal devices may use network services provided by the network device 1102, which is not limited in the embodiments of the present disclosure.

Exemplarily, FIG. 3 is a schematic diagram of an architecture of another communication system according to some embodiments of the present disclosure. Referring to FIG. 3, the communication system includes a terminal device 1201, a satellite 1202, and a base station 1203. Wireless communication may be carried out between the terminal device 1201 and the satellite 1202. Communication may be carried out between the satellite 1202 and the base station 1203. A network formed between the terminal device 1201, the satellite 1202, and the base station 1203 may also be referred to as an NTN. In the architecture of the communication system shown in FIG. 3, the satellite 1202 does not function as the base station, and the communication between the terminal device 1201 and the base station 1203 needs to be relayed over the satellite 1202. In this system architecture, the base station 1203 may be referred to as a network device. In some embodiments of the present disclosure, the communication system includes a plurality of network devices 1203, and within the coverage of each of the network devices 1203, another number of terminal devices may use network services provided by the network device 1203, which is not limited in the embodiments of the present disclosure.

A network architecture and a service scenario described in the embodiments of the present disclosure are intended to describe the technical solutions according to the embodiments of the present disclosure more clearly, but do not constitute any limitation on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

The technical solutions according to the embodiments of the present disclosure may be applicable to various communication systems, such as a global system for mobile communications (GSM), a code division multiple access (CDMA) system, a wideband code division multiple access (WCDMA) system, a general packet radio system (GPRS) system, an LTE system, a long term evolution-advanced (LTE-A) system, an NR system, an evolved system of the NR system, an LTE-based access to unlicensed spectrum (LTE-U) system, an NR-based access to unlicensed spectrum (NR-U) system, an NTN system, a universal mobile telecommunication system (UMTS) system, a wireless local area network (WLAN) system, a wireless fidelity (Wi-Fi) system, a 5^{th} generation (5G) system, or other communication systems.

Generally, a conventional communication system supports a limited quantity of connections and is easy to implement. However, with development of communication technologies, a mobile communication system supports not only conventional communications, but also other communications, such as device-to-device (D2D) communications, machine to machine (M2M) communications, machine type communications (MTC), vehicle-to-vehicle (V2V) communications, vehicle-to-everything (V2X) communications, and the like. The embodiments of the present disclosure are also be applicable to these communication systems.

The communication system in the embodiments of the present disclosure are applicable to a carrier aggregation (CA) scenario, a dual connectivity (DC) scenario, and a standalone (SA) networking scenario.

The communication system in the embodiments of the present disclosure are applicable to an unlicensed spectrum, wherein the unlicensed spectrum is also considered as a shared spectrum. Alternatively, the communication systems in the embodiments of the present disclosure are also applicable to a licensed spectrum, wherein the licensed spectrum is also considered as an unshared spectrum.

The embodiments of the present disclosure are applicable to the NTN system and a terrestrial network (TN) system.

In the embodiments of the present disclosure, the terminal device may be referred to as a user equipment (UE), an access terminal, a user unit, a user station, a mobile terminal, a mobile station, a remote station, a remote terminal, a mobile device, a wireless communication device, a user agent, or a user apparatus. In some embodiments, the terminal device may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For convenience of description, the devices mentioned above are collectively referred to as the terminal device.

In the embodiments of the present disclosure, the network device provides a service for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. The small cells have the characteristics of small coverage and low transmit power, and are applicable to providing high-rate data transmission services.

It should be understood that the term "indication" mentioned in the embodiments of the present disclosure may be a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association is present between A and B.

In the description of the embodiments of the present disclosure, the term "corresponding" may refer to a direct correspondence or an indirect correspondence that is present between two items, may refer to an association that is present between two items, or may refer to another relationship such as indicating and being indicated, or configuring and being configured.

The term "configuration" in the embodiments of the present disclosure may include configuration over at least one of system information (SI), a radio resource control (RRC) signaling, or a media access control element (MAC CE).

In some embodiments of the present disclosure, the term "predefined" or "preset" may be implemented by pre-storing a corresponding code, a corresponding table, or another method that may be used to indicate relevant information in a device (such as the terminal device or the network device), and a specific implementation method thereof is not limited in the present disclosure. For example, the term "predefined" refers to "defined" in a protocol.

In some embodiments of the present disclosure, the term "protocol" may refer to a standard protocol in the communication field, and for example, may include an LTE protocol, an NR protocol, and a related protocol applicable to a future communication system, which is not limited in the present disclosure.

### 2. Synchronization in the NR-NTN and IoT-NTN systems

In the NTN system, the network device needs to transmit synchronization assistance information to the terminal device, wherein the synchronization assistance information is used by the terminal device to complete time-domain and/or frequency-domain synchronization. The synchronization assistance information indicates at least one of: ephemeris information of a serving satellite, a common timing value parameter, epoch time indication information (which may be referred to as EpochTime, and is configured to determine time t0), or a duration of a target timer.

The terminal device completes the corresponding time-domain and/or frequency-domain synchronization based on the synchronization assistance information and a global navigation satellite system (GNSS) capability of the terminal device. Based on the GNSS capability of the terminal device, the terminal device may acquire at least one of following information: a position of the terminal device, a time reference, and a frequency reference. Moreover, based on the above information and the information acquired based on the synchronization assistance information, the terminal device may acquire a timing and/or a frequency offset, and apply timing advance compensation and/or frequency offset adjustment in an idle state, an inactive state, or a connected state.

Because the synchronization assistance information changes over time, it is necessary to configure one or more timers for the terminal device in the NTN system. The one or more timers may be used by the terminal device to determine whether the acquired synchronization assistance information is valid.

For example, the synchronization assistance information corresponds to the target timer. Upon start or restart of the target timer by the terminal device, the terminal device may assume that the acquired synchronization assistance information is valid prior to expiration of the target timer (or prior to end of the duration of the target timer).

### 3. Synchronization assistance information in the NTN system

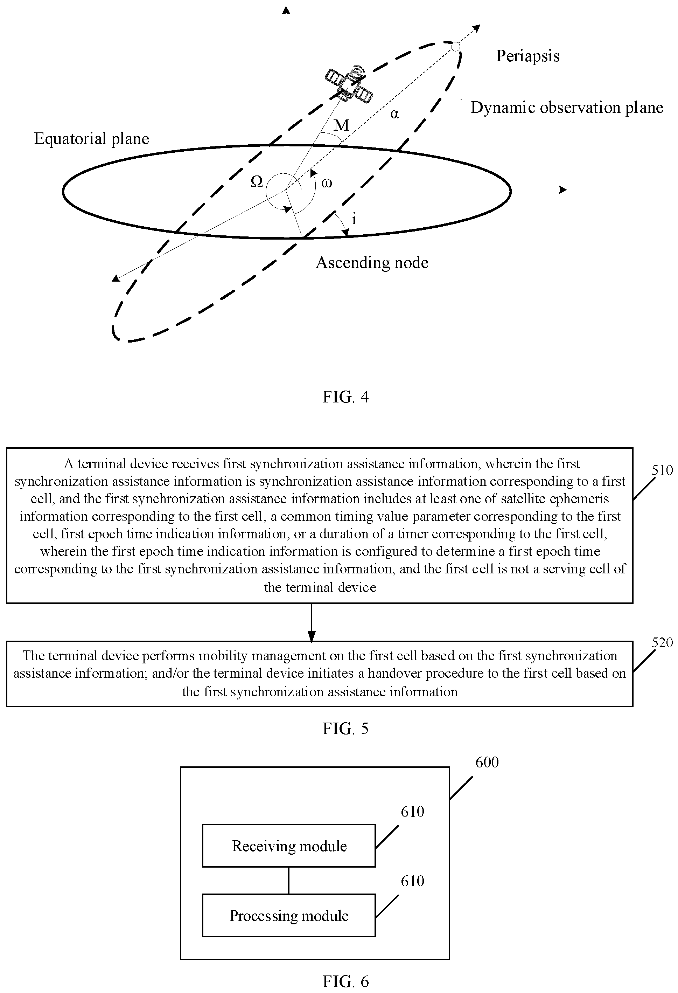

In some embodiments of the present disclosure, the ephemeris information of the serving satellite is configured to determine position and velocity state (PVS) vector information of the serving satellite. The ephemeris information of the serving satellite in the synchronization assistance information transmitted by the network device may be in at least one of following two formats:
Format 1: The ephemeris information format based on an instantaneous state vector, for example, a PVS vector of a satellite at specific time. In this format, ephemeris information of the satellite includes PVS vectors (SX, SY, SZ, VX, VY, VZ) in an earth-centered earth-fixed (ECEF) coordinate system at the time t0.
   By way of example but not limitation, based on the PVS vectors of the satellite in the ECEF coordinate system at the time t0, the terminal device acquires PVS vectors of the satellite in the ECEF coordinate system at time t.
Format 2: The ephemeris information format based on orbit information. In this format, as shown in FIG. 4, the ephemeris information of the satellite includes ephemeris parameters (α (km), e, I (deg), Ω (deg), ω (deg), and M (deg)) at the time t0. Among the above parameters, α represents a semi-major axis, which can be in units of meters; e represents eccentricity; ω represents an argument of periapsis, which can be in units of radians; Ω represents a longitude of an ascending node, which can be in units of radians; i represents an inclination, which can be in units of radians; and M represents a mean anomaly at the epoch time t0, which can be in units of radians.

By way of example but not limitation, based on the received ephemeris parameters of the satellite at the time t0, the terminal device may acquire the PVS vectors of the satellite in the ECEF coordinate system at the time t0. Based on the PVS vectors of the satellite in the ECEF coordinate system at the time t0, the terminal device may acquire the PVS vectors of the satellite in the ECEF coordinate system at the time t.

By way of example but not limitation, based on the received ephemeris parameters of the satellite at the time t0, the terminal device acquires ephemeris parameters of the satellite at the time t. Then, based on the ephemeris parameters of the satellite at the time t, the terminal device may acquire the PVS vectors of the satellite in the ECEF coordinate system at the time t.

The PVS vectors based on the ECEF coordinate system include (SX, SY, SZ, VX, VY, VZ). (SX, SY, SZ) corresponds to a position of the satellite, and (VX, VY, VZ) corresponds to a velocity of the satellite.

For the above two formats, a notification method of the format 2 has a lower overhead compared with that of the format 1. However, for the format 2, the terminal device needs to model and estimate the PVS vectors of the satellite. Therefore, the format 2 has lower accuracy than the format 1.

In some embodiments of the present disclosure, the common timing value parameter (or referred to as "common TA parameter") includes at least one of: a common timing value, a drift value of the common timing value (for example, a first derivative of the common timing value), or a variation rate of the drift value of the common timing value (for example, a second derivative of the common timing value).

By way of example but not limitation, based on a received common timing value parameter at the time t0, the terminal device may acquire a common timing value parameter at the time t. Alternatively, based on a received common timing value parameter at the time t0, the terminal device may acquire a common timing value at the time t.

In some embodiments of the present disclosure, the time t0 is an epoch time corresponding to the ephemeris information of the serving satellite, and/or, the above time t0 is an epoch time corresponding to the common timing value parameter.

In some embodiments of the present disclosure, the synchronization assistance information in the NTN system includes at least one of the following:
common TA parameter, which includes at least one of: common timing value, for example, TACommon, which is in units of µs; drift value of the common timing value, for example, TACommonDrift, which is in units of µs/s; or variation rate of the drift value of the common timing value, for example, TACommonDrift Variation, which is in units of µs/s2;
first format of the ephemeris information of the serving satellite, which includes: X-axis parameter of the position of the satellite, for example, ServingSatelliteEphemerisStateVectorX, which is in units of m; Y-axis parameter of the position of the satellite, for example, ServingSatelliteEphemerisState Vector Y, which is in units of m; Z-axis parameter of the position of the satellite, for example, ServingSatelliteEphemerisState VectorZ, which is in units of m;X-axis parameter of the velocity of the satellite, for example, ServingSatelliteEphemerisStateVectorVx, which is in units of m/s; Y-axis parameter of the velocity of the satellite, for example, ServingSatelliteEphemerisStateVectorVy, which is in units of m/s; and Z-axis parameter of the velocity of the satellite, for example, ServingSatelliteEphemerisStateVectorVz, which is in units of m/s;
second format of the ephemeris information of the serving satellite, which includes: semi-major axis (α), for example, ServingSatelliteEphemerisSemiMajorAxis, which is in units of m; eccentricity (e), for example, ServingSatelliteEphemerisEccentricity E; argument of periapsis (ω), for example, ServingSatelliteEphemerisArgumentOfPeriapsis, which is in units of radians; longitude of an ascending node (Ω), for example, Serving Satellite EphemerisLongitudeOfAscendingNode, which is in units of radians; inclination (i), for example, ServingSatelliteEphemerisInclinationI, which is in units of radians; or mean anomaly M at the epoch time t0: ServingSatelliteEphemerisMeanAnomalyM, which is in units of radians;
duration of the target timer, for example, ntnUlSyncValidityDuration, which is in units of s; or
epoch time indication time, for example, EpochTime, which indicates the epoch time t0 of the synchronization assistance information (for example, the ephemeris information of the serving satellite and the common TA parameter). Specifically, the epoch time indication information indicates a system frame number (SFN) and a subframe number that are associated with the epoch time t0. By way of example but not limitation, the SFN indicated by the epoch time indication information ranges from 0 to 1023, and the subframe number indicated by the epoch time indication information ranges from 0 to 9.

In the case that the epoch time indication information is explicitly indicated over a system information block (SIB) or dedicated signaling, the epoch time t0 of the synchronization assistance information is a start time of a target downlink subframe. The target downlink subframe is determined by the SFN and the subframe number that are indicated by the epoch time indication information, and the epoch time indication information is transmitted together with the synchronization assistance information.

Alternatively, in the case that the synchronization assistance information is indicated by a SIB rather than a SIB1 and does not explicitly indicate the epoch time indication information, the epoch time t0 of the synchronization assistance information is implicitly determined based on an end position of an SI window of the system information for transmitting the synchronization assistance information.

In some embodiments, the epoch time indication information of the synchronization assistance information (such as the ephemeris information of the serving satellite and the common TA parameter) or a reference point of the epoch time t0 is an uplink time synchronization reference point.

By way of example but not limitation, synchronization assistance information in the NR-NTN system includes at least one of: the common TA parameter, the first format of the ephemeris information of the serving satellite, the second format of the ephemeris information of the serving satellite, the duration of the target timer, or the epoch time indication information.

The common TA parameter includes at least one of the TACommon, the TACommonDrift, or the TACommonDriftVariation.

The first format of the ephemeris information of the serving satellite includes the ServingSatelliteEphemerisState VectorX, the ServingSatelliteEphemerisStateVectorY, the ServingSatelliteEphemerisState VectorZ, the ServingSatelliteEphemerisStateVectorVx, the ServingSatelliteEphemerisStateVectorVy, and the ServingSatelliteEphemerisStateVectorVz.

The second format of the ephemeris information of the serving satellite includes the ServingSatelliteEphemerisSemiMajorAxis, the ServingSatelliteEphemerisEccentricity E, the ServingSatelliteEphemerisArgumentOfPeriapsis, the ServingSatellite EphemerisLongitudeOfAscendingNode, the ServingSatelliteEphemerisInclinationI, and the ServingSatelliteEphemerisMeanAnomalyM.

The duration of the target timer is the ntnUlSyncValidityDuration.

The epoch time indication time is the EpochTime.

By way of example but not limitation, synchronization assistance information in the NB-IoT-NTN system includes at least one of: the common TA parameter, the first format of the ephemeris information of the serving satellite, the second format of the ephemeris information of the serving satellite, the duration of the target timer, or the epoch time indication information.

The common TA parameter includes at least one of NTACommon-NB-r17, NTACommonDrift-NB-r17, and NTACommonDriftVariation-NB-r17.

The first format of the ephemeris information of the serving satellite includes ServingSatelliteEphemerisStateVectorX-NB-r17, ServingSatelliteEphemerisState Vector Y - NB-r 17, ServingSatelliteEphemerisState VectorZ-NB-r17, ServingSatelliteEphemerisState VectorXv-NB-r17, ServingSatelliteEphemerisStateVectorYv-NB-r17, and ServingSatelliteEphemerisStateVectorZv-NB-r17.

The second format of the ephemeris information of the serving satellite includes ServingSatelliteEphemerisSemiMajorAxis-NB-r17, ServingSatelliteEphemerisEccentricityE-NB-r17, ServingSatelliteEphemerisArgumentOfPeriapsis-NB-r17, ServingSatelliteEphemerisLongitudeOfAscendingNode-NB-r17, ServingSatelliteEphemerisInclinationI-NB-r17, and ServingSatelliteEphemerisMeanAnomalyM-NB-r17.

The duration of the target timer is ntnServingSatULSyncValidityDuration-NB-r17.

The epoch time indication time is EpochTime-NB-r17.

By way of example but not limitation, synchronization assistance information in the eMTC-NTN system includes at least one of: the common TA parameter, the first format of the ephemeris information of the serving satellite, the second format of the ephemeris information of the serving satellite, the duration of the target timer, or the epoch time indication information.

The common TA parameter includes at least one of NTACommon-r17, NTACommonDrift-r17, or NTACommonDriftVariation-r17.

The first format of the ephemeris information of the serving satellite includes ServingSatelliteEphemerisState VectorX-r17, ServingSatelliteEphemerisState VectorY-r17, ServingSatelliteEphemerisState VectorZ-r17, ServingSatelliteEphemerisState VectorXv-r17, ServingSatelliteEphemerisStateVectorYv-r17, and ServingSatelliteEphemerisStateVectorZv-r17.

The second format of the ephemeris information of the serving satellite includes ServingSatelliteEphemerisSemiMajorAxis-r17, ServingSatelliteEphemerisEccentricity E-r 17, ServingSatelliteEphemerisArgumentOfPeriapsis-r17, ServingSatelliteEphemerisLongitudeOfAscendingNode-r17, ServingSatelliteEphemerisInclinationI-r17, or ServingSatelliteEphemerisMeanAnomalyM-r17.

The duration of the target timer is ntnServingSatULSyncValidityDuration-r17.

The epoch time indication time is EpochTime-r17.

The above examples describe the information included in the synchronization assistance information in the NR-NTN system, the NB-IoT-NTN system, and the eMTC-NTN system. The name of each piece of information may vary in different NTN systems, but its meaning is basically the same or similar. For details, reference may be made to the description and explanation of the synchronization assistance information in the NTN system.

As analyzed earlier, in the NTN system, the terminal device needs to acquire the synchronization assistance information of the serving satellite to complete the time-domain and/or frequency-domain synchronization with the serving satellite, such that the terminal device is capable of communicating normally with a serving cell. Correspondingly, in a measurement and mobility management process or in a handover procedure, the terminal device may require the network device to provide synchronization assistance information of a neighboring cell to complete measurement and mobility management of the neighboring cell, or complete a handover. However, there is currently no clear technical solution on how the network device provides the synchronization assistance information of the neighboring cell.

In the present disclosure, synchronization assistance information of another cell (for example, a neighboring cell) other than a serving cell is acquired by a terminal device, and an epoch time corresponding to the synchronization assistance information of the another cell (for example, the neighboring cell) is further determined, such that the terminal device is capable of determining synchronization information of the another cell (for example, the neighboring cell) based on the synchronization assistance information of the another cell (for example, the neighboring cell). In this way, the terminal device is capable of determining a time position of a measurement time window of the another cell (for example, the neighboring cell) in the process of performing measurement and mobility management on the another cell (for example, the neighboring cell), or complete uplink time-domain and/or frequency-domain synchronization with a target cell in the process of performing a handover to the another cell (for example, the neighboring cell, which is also referred to as the target cell), thereby helping to improve system efficiency.

FIG. 5 is a flowchart of a method for wireless communication according to some embodiments of the present disclosure. The method may be applicable to any one of the communication systems shown in FIGS. 1 to 3. The method may include at least one of the following processes (510 and 520).

In process 510, a terminal device receives first synchronization assistance information, wherein the first synchronization assistance information is synchronization assistance information corresponding to a first cell, and the first synchronization assistance information includes at least one of satellite ephemeris information corresponding to the first cell, a common timing value parameter corresponding to the first cell, first epoch time indication information, or a duration of a timer corresponding to the first cell, wherein the first epoch time indication information is configured to determine a first epoch time corresponding to the first synchronization assistance information, and the first cell is not a serving cell of the terminal device.

In some embodiments, the first cell is a neighboring cell of the terminal device, or the first cell is a target cell to which the terminal device initiates a handover procedure.

In some embodiments, a network device transmits the first synchronization assistance information to the terminal device. Correspondingly, the terminal device receives the first synchronization assistance information from the network device. In some embodiments, the above network device is a network device of a second cell, and the second cell is the serving cell of the terminal device. The terminal device receives the first synchronization assistance information over the network device of the second cell, in other words, the terminal device receives the first synchronization assistance information from the network device of the second cell. In some embodiments, the first synchronization assistance information is transmitted by a network device of the first cell to the network device of the second cell. The first cell is the neighboring cell of the terminal device, or the first cell is the target cell to which the terminal device initiates the handover procedure. In addition, the second cell is the serving cell of the terminal device. For the handover procedure, the second cell (or the serving cell of the terminal device) is a source cell from which the terminal device initiates the handover procedure.

In the embodiments of the present disclosure, the first synchronization assistance information is synchronization assistance information corresponding to the first cell, and the first epoch time is an epoch time corresponding to the first synchronization assistance information. The first epoch time may also be referred to as a first epoch time t0.

In some embodiments, based on the first synchronization assistance information that is of the first cell and corresponds to the first epoch time, the terminal device acquires first synchronization assistance information that is of the first cell and corresponds to target time.

In some embodiments, the process that the terminal device performs mobility management on the first cell based on the first synchronization assistance information includes: performing, by the terminal device, the mobility management on the first cell based on the first synchronization assistance information, corresponding to the target time, of the first cell. In some embodiments, the target time corresponds to time when the terminal device performs the mobility management on the first cell. In some embodiments, the target time is determined based on a downlink timing of the second cell, wherein the second cell is the serving cell of the terminal device. Alternatively, a reference point of the target time is a downlink time synchronization reference point of the first cell.

In some embodiments, the process that the terminal device initiates the handover procedure to the first cell based on the first synchronization assistance information includes: initiating, by the terminal device, the handover procedure to the first cell based on the first synchronization assistance information, corresponding to the target time, of the first cell. In some embodiments, the target time corresponds to time when the terminal device transmits an uplink physical channel to the first cell. For example, the target time corresponds to time when the terminal device transmits a physical random access channel (PRACH) to the first cell; and/or the target time corresponds to time when the terminal device transmits a message A (MsgA) to the first cell; and/or the target time corresponds to time when the terminal device transmits a physical uplink shared channel (PUSCH) to the first cell for the first time. In some embodiments, the target time is determined based on the downlink timing of the second cell, wherein the second cell is the serving cell of the terminal device. Alternatively, the target time is determined based on a downlink timing of the first cell. Alternatively, the reference point of the target time is an uplink time synchronization reference point of the first cell.

In some embodiments, the first epoch time is a time of starting or restarting the timer corresponding to the first cell.

For example, the first synchronization assistance information includes at least the satellite ephemeris information corresponding to the first cell and the duration of the timer corresponding to the first cell. The first synchronization assistance information corresponds to the first epoch time (that is, the satellite ephemeris information corresponding to the first cell corresponds to the first epoch time). Starting from the first epoch time and prior to end of the duration of the timer corresponding to the first cell, the terminal device may assume that the satellite ephemeris information that corresponds to the first cell and is acquired by the terminal device is valid. Alternatively, the target time is intermediate time from the first epoch time to an end of the duration of the timer corresponding to the first cell.

For another example, the first synchronization assistance information includes at least the common timing value parameter corresponding to the first cell and the duration of the timer corresponding to the first cell. The first synchronization assistance information corresponds to the first epoch time (in other words, the common timing value parameter corresponding to the first cell corresponds to the first epoch time). Starting from the first epoch time and prior to end of the duration of the timer corresponding to the first cell, the terminal device may assume that the common timing value parameter that corresponds to the first cell and is acquired by the terminal device is valid. Alternatively, the target time is intermediate time from the first epoch time to an end of the duration of the timer corresponding to the first cell.

For another example, the first synchronization assistance information includes at least the satellite ephemeris information corresponding to the first cell, the common timing value parameter corresponding to the first cell, and the duration of the timer corresponding to the first cell. The first synchronization assistance information corresponds to the first epoch time (in other words, the satellite ephemeris information corresponding to the first cell and the common timing value parameter corresponding to the first cell correspond to the first epoch time). Starting from the first epoch time and prior to end of the duration of the timer corresponding to the first cell, the terminal device may assume that the satellite ephemeris information and the common timing value parameter that correspond to the first cell and are acquired by the terminal device are valid. Alternatively, the target time is intermediate time from the first epoch time to an end of the duration of the timer corresponding to the first cell.

In some embodiments, the satellite ephemeris information corresponding to the first cell is configured to determine a timing advance value of a serving link of the terminal device and the first cell. The serving link of the terminal device and the first cell is a link between the terminal device and a satellite corresponding to the first cell.

In some embodiments, the common timing value parameter corresponding to the first cell is configured to determine a timing advance value of a feeder link of the first cell. The feeder link of the first cell is a link between the network device corresponding to the first cell and the satellite corresponding to the first cell.

In some embodiments, the first epoch time is determined based on the first epoch time indication information. For example, in the case that the first synchronization assistance information includes the first epoch time indication information, the first epoch time is determined based on the first epoch time indication information.

In some embodiments, the first epoch time is determined in accordance with a predefined rule. For example, in the case that the first synchronization assistance information does not include the first epoch time indication information, the first epoch time is determined in accordance with the predefined rule.

In some embodiments, that the first epoch time indication information indicates the first epoch time corresponding to the first synchronization assistance information includes: the first epoch time indication information indicates a first time unit, and the first epoch time is determined based on the first time unit. In some embodiments, the first epoch time is a start or end time of the first time unit.

The first epoch time indication information may directly indicate the first time unit. For example, the first epoch time indication information indicates an SFN and a subframe number that correspond to the first time unit. Alternatively, the first epoch time indication information may indirectly indicate the first time unit. For example, the first epoch time indication information indicates an SFN and a subframe number that correspond to a second time unit, and there is an association relationship between the second time unit and the first time unit. The terminal device may determine the first time unit based on the second time unit. In some embodiments, the terminal device determines the first time unit based on the second time unit and a drift value. For example, the terminal device adds or subtracts the drift value to or from the second time unit to acquire the first time unit. The drift value may be indicated by the first epoch time indication information or determined in another manner, which is not limited in the embodiments of the present disclosure.

In some embodiments, the first time unit is a first downlink subframe, and that the first epoch time indication information indicates the first time unit includes: the first epoch time indication information indicates an SFN and a subframe number that correspond to the first downlink subframe; or the first epoch time indication information indicates an SFN and a subframe number that correspond to a second downlink subframe, and a first drift value, wherein the first downlink subframe is determined based on the second downlink subframe and the first drift value. For example, the first downlink subframe is acquired by adding or subtracting the first drift value to or from the second downlink subframe.

In some embodiments, the first time unit is a first downlink slot, and that the first epoch time indication information indicates the first time unit includes: the first epoch time indication information indicates an SFN and a slot number that correspond to the first downlink slot; or the first epoch time indication information indicates an SFN and a slot number that correspond to a second downlink slot, and a first drift value, and the first downlink slot is determined based on the second downlink slot and the first drift value. For example, the first downlink slot is acquired by adding or subtracting the first drift value to or from the second downlink slot.

In some embodiments, a unit of the first drift value is one of a subframe, a slot, a symbol, a half frame, a frame, a millisecond, or a microsecond. However, the embodiments of the present disclosure do not limit the unit of the first drift value, and the first drift value may also have another unit. The above is only illustrative and explanatory.

In some embodiments, the first time unit is the first downlink subframe, and the unit of the first drift value is the subframe.

In some embodiments, the first time unit is the first downlink slot, and the unit of the first drift value is the slot or the symbol.

In some embodiments, the first time unit corresponds to the second cell, or the first time unit is determined based on the downlink timing of the second cell, wherein the second cell is the serving cell of the terminal device.

In some embodiments, the first time unit corresponds to the first cell, or the first time unit is determined based on the downlink timing of the first cell.

In some embodiments, the first time unit is determined based on an uplink timing of the second cell, wherein the second cell is the serving cell of the terminal device.

In some embodiments, the first time unit is determined based on an uplink timing of the first cell.

In some embodiments, that the first epoch time indication information indicates the first epoch time corresponding to the first synchronization assistance information includes: the first epoch time indication information indicates a second drift value, and the first epoch time is determined based on the second drift value.

In some embodiments, the first epoch time is determined based on the second drift value and second epoch time, wherein the second epoch time is an epoch time corresponding to second synchronization assistance information. For example, in the case that the second synchronization assistance information includes second epoch time indication information, the terminal device determines the second epoch time based on the second epoch time indication information, and then determines the first epoch time based on the second epoch time and the second drift value, for example, adds or subtracts the second drift value to or from the second epoch time to acquire the first epoch time.

In some embodiments, the first epoch time is determined based on the second drift value and the second epoch time, wherein the second epoch time is a time determined in accordance with a predefined rule. For example, in the case that the second synchronization assistance information does not include the second epoch time indication information, the terminal device determines the second epoch time in accordance with the predefined rule. For example, the terminal device determines an end position of an SI window for transmitting the second synchronization assistance information as the second epoch time. Then, the terminal device determines the first epoch time based on the second epoch time and the second drift value. For example, the first epoch time is acquired by adding or subtracting the second drift value to or from the second epoch time.

In some embodiments, the first epoch time is determined based on the second drift value and the second time unit, wherein the second time unit is a time unit corresponding to the second epoch time, and the second epoch time is the epoch time corresponding to the second synchronization assistance information. In some embodiments, the second epoch time is determined based on the second time unit, for example, the second epoch time is a start or end time of the second time unit. For example, in the case that the second synchronization assistance information includes the second epoch time indication information, the terminal device determines the second time unit based on the second epoch time indication information, and then determines the first time unit based on the second time unit and the second drift value, for example, adds or subtracts the second drift value to or from the second time unit to acquire the first time unit, and finally determines the first epoch time based on the first time unit, for example, determines the start or end time of the first time unit as the first epoch time. Alternatively, the terminal device determines the second time unit based on the second epoch time indication information, and then determines the first epoch time based on the start or end time of the second time unit and the second drift value, for example, adds or subtracts the second drift value to or from the start or end time of the second time unit to acquire the first epoch time.

In some embodiments, the first epoch time is determined based on the second drift value and the second time unit, wherein the second time unit is determined in accordance with a predefined rule. For example, in the case that the second synchronization assistance information does not include the second epoch time indication information, the terminal device determines the second time unit in accordance with the predefined rule. For example, the terminal device determines a time unit in which the SI window of the system information for transmitting the second synchronization assistance information is located as the second time unit, and then the terminal device determines the first epoch time based on the second time unit and the second drift value. For a specific method for determining the first epoch time based on the second time unit and the second drift value, reference may be made to the description in the previous paragraph, which is not described herein any further.

In some embodiments, a unit of the second drift value is one of the subframe, the slot, the symbol, the half frame, the frame, the millisecond, or the microsecond. However, the embodiments of the present disclosure do not limit the unit of the second drift value, and the second drift value may also have another unit. The above description is only illustrative and explanatory.

In some embodiments, the second time unit mentioned above or below may be the second downlink subframe or the second downlink slot. In some embodiments, the second time unit is the time unit corresponding to the second epoch time, and the second epoch time is the epoch time corresponding to the second synchronization assistance information. In some embodiments, the second synchronization assistance information is synchronization assistance information corresponding to the second cell. The second cell is the serving cell of the terminal device; or the second cell is not the serving cell of the terminal device, and the first cell is different from the second cell.

In some embodiments, in the case that the first synchronization assistance information does not include the first epoch time indication information, the first epoch time is determined in one of following manners 1 to 8.

Manner 1: The first epoch time is a time determined in accordance with the predefined rule. In some embodiments, the first epoch time is implicitly determined based on a window of system information for transmitting the first synchronization assistance information. For example, the first epoch time is an end position of the SI window of the system information for transmitting the first synchronization assistance information.

Manner 2: The first epoch time is the same as the second epoch time, wherein the second epoch time is the epoch time corresponding to the second synchronization assistance information. For example, the terminal device directly determines the second epoch time as the first epoch time. In other words, the first epoch time and the second epoch time are same time.

Manner 3: The first epoch time is determined based on a third drift value and the second epoch time, wherein the second epoch time is the epoch time corresponding to the second synchronization assistance information. For example, the terminal device adds or subtracts the third drift value to or from the second epoch time to acquire the first epoch time.

Manner 4: The first epoch time is determined based on the third drift value and the second epoch time, wherein the second epoch time is the time determined in accordance with the predefined rule. For example, the terminal device determines the end position of the SI window of the system information for transmitting the second synchronization assistance information as the second epoch time. The terminal device adds or subtracts the third drift value to or from the second epoch time to acquire the first epoch time.

Manner 5: The first epoch time is the start or end time of the second time unit, wherein the second time unit is the time unit corresponding to the second epoch time, and the second epoch time is the epoch time corresponding to the second synchronization assistance information.

Manner 6: The first epoch time is the start or end time of the second time unit, wherein the second time unit is a time unit determined in accordance with a predefined rule.

Manner 7: The first epoch time is determined based on the third drift value and the second time unit, wherein the second time unit is the time unit corresponding to the second epoch time, and the second epoch time is the epoch time corresponding to the second synchronization assistance information.

Manner 8: The first epoch time is determined based on the third drift value and the second time unit, wherein the second time unit is the time unit determined in accordance with the predefined rule.

For a description and a determining method of the second time unit in the above manners 4 to 8, reference may be made to the description in the above embodiments, which are not described herein any further. In addition, in the case that determining the first epoch time based on the third drift value and the second time unit, the terminal device may add or subtract the third drift value to or from the start or end time of the second time unit to acquire the first epoch time.

In some embodiments, a unit of the third drift value is one of the subframe, slot, symbol, half frame, frame, millisecond, and microsecond. However, the embodiments of the present disclosure do not limit the unit of the third drift value, and the third drift value may also have another unit. The above description is only illustrative and explanatory.

In some embodiments, the third drift value is preset or determined based on configuration information of the network device. For example, the third drift value is not indicated together with the first synchronization assistance information. The third drift value is indicated by the network device over another configuration information rather than the first synchronization assistance information.

In some embodiments, the second epoch time corresponds to the second cell, or the second epoch time is determined based on the downlink timing of the second cell. In some embodiments, the second epoch time corresponds to the first cell, or the second epoch time is determined based on the downlink timing of the first cell. In some embodiments, the second time unit corresponds to the second cell, or the second time unit is determined based on the downlink timing of the second cell. In some embodiments, the second time unit corresponds to the first cell, or the second time unit is determined based on the downlink timing of the first cell.

In some embodiments, the second epoch time is determined based on the uplink timing of the second cell. In some embodiments, the second epoch time is determined based on the uplink timing of the first cell. In some embodiments, the second time unit is determined based on the uplink timing of the second cell. In some embodiments, the second time unit is determined based on the uplink timing of the first cell.

In the embodiments of the present disclosure, the second synchronization assistance information is the synchronization assistance information corresponding to the second cell, and the second epoch time is the epoch time corresponding to the second synchronization assistance information. The second epoch time may also be referred to as second epoch time t0. In some embodiments, the second synchronization assistance information includes at least one of satellite ephemeris information corresponding to the second cell, a common timing value parameter corresponding to the second cell, the second epoch time indication information, or a duration of a timer corresponding to the second cell, wherein the second epoch time indication information is configured to determine the second epoch time.

In some embodiments, in the case that the second synchronization assistance information does not include the second epoch time indication information, the second epoch time is the time determined in accordance with the predefined rule. For example, the second epoch time is implicitly determined based on the SI window of the system information for transmitting the second synchronization assistance information. In some embodiments, the second epoch time is the end position of the SI window of the system information for transmitting the second synchronization assistance information.

In some embodiments, a reference point of the first epoch time is the uplink time synchronization reference point of the first cell.

In some embodiments, the reference point of the first epoch time is the downlink time synchronization reference point of the first cell.

In some embodiments, the reference point of the first epoch time is an uplink time synchronization reference point of the second cell, wherein the second cell is the serving cell of the terminal device.

In some embodiments, a reference point of the second epoch time is the uplink time synchronization reference point of the second cell, wherein the second cell is the serving cell of the terminal device.

In some embodiments, the common timing value parameter corresponding to the first cell includes at least one of a common timing value, a drift value of the common timing value, or a variation rate of the drift value of the common timing value.

In some embodiments, the satellite ephemeris information corresponding to the first cell is in a first format, in a second format, or in both first and second formats. The satellite ephemeris information corresponding to the first cell in the first format includes: an X-axis parameter of a position of the satellite corresponding to the first cell, a Y-axis parameter of the position of the satellite corresponding to the first cell, a Z-axis parameter of the position of the satellite corresponding to the first cell, an X-axis parameter of a velocity of the satellite corresponding to the first cell, a Y-axis parameter of the velocity of the satellite corresponding to the first cell, or a Z-axis parameter of the velocity of the satellite corresponding to the first cell. The satellite ephemeris information corresponding to the first cell in the second format includes: a semi-major axis of the satellite corresponding to the first cell, eccentricity of the satellite corresponding to the first cell, an argument of periapsis of the satellite corresponding to the first cell, a longitude of an ascending node of the satellite corresponding to the first cell, an inclination of the satellite corresponding to the first cell, and a mean anomaly of the satellite corresponding to the first cell at the first epoch time.

In process 520, the terminal device performs the mobility management on the first cell based on the first synchronization assistance information, and/or the terminal device initiates the handover procedure to the first cell based on the first synchronization assistance information.

In some embodiments, that the terminal device performs the mobility management on the first cell based on the first synchronization assistance information includes: determining, by the terminal device, a position of a synchronization signal(SS)/physical broadcast channel (PBCH) block measurement timing configuration (SMTC) occasion corresponding to the first cell based on the first synchronization assistance information, and performing radio resource management (RRM) measurement on the first cell based on the SMTC occasion.

In some embodiments, that the terminal device performs the mobility management on the first cell based on the first synchronization assistance information includes: determining, by the terminal device, a position of a received signal strength indicator (RSSI) measurement timing configuration (RMTC) occasion corresponding to the first cell based on the first synchronization assistance information, and performing RSSI measurement on the first cell based on the RMTC occasion.

In some embodiments, that the terminal device initiates the handover procedure to the first cell based on the first synchronization assistance information includes: determining, by the terminal device, uplink timing advance information corresponding to the first cell based on the first synchronization assistance information, and initiating the handover procedure to the first cell based on the uplink timing advance information corresponding to the first cell.

In some embodiments, the terminal device receives the first synchronization assistance information corresponding to the first cell and performs the mobility management on the first cell based on the first synchronization assistance information. The first synchronization assistance information corresponds to the first epoch time, and the first epoch time corresponds to the second cell, or the first epoch time is determined based on the downlink timing of the second cell. The first cell is the neighboring cell of the terminal device, and the second cell is the serving cell of the terminal device.

In some embodiments, the first epoch time is the start or end time of the first time unit. That the first epoch time corresponds to the second cell, or the first epoch time is determined based on the downlink timing of the second cell may mean that the first time unit corresponds to the second cell, or the first time unit is determined based on the downlink timing of the second cell.

In some embodiments, the first synchronization assistance information is transmitted by the network device of the first cell to the network device of the second cell, and then transmitted by the network device of the second cell to the terminal device. In some embodiments, the first epoch time is determined by the network device of the first cell based on the downlink timing of the second cell. Alternatively, the first epoch time is determined by the network device of the first cell based on the downlink timing of the first cell, and converted by the network device of the second cell into the corresponding downlink timing of the second cell.

In some embodiments, the first synchronization assistance information includes the first epoch time indication information, wherein the first epoch time indication information indicates the first time unit determined based on the downlink timing of the second cell. Specifically, the first time unit is the first downlink subframe, and the first epoch time indication information indicates the SFN and the subframe number that correspond to the first downlink subframe and are determined based on the downlink timing of the second cell. Alternatively, the first epoch time indication information indicates the SFN and the subframe number that correspond to the second downlink subframe and are determined based on the downlink timing of the second cell, and the first drift value, wherein the first downlink subframe is determined based on the second downlink subframe and the first drift value. This is mainly because the terminal device needs to determine a position of a corresponding measurement occasion such as the SMTC occasion and/or the RMTC occasion of the first cell based on the first synchronization assistance information in a process of performing the mobility management on the first cell. In other words, the terminal device has not acquired the downlink timing of the first cell, and therefore has to determine the first epoch time only based on a downlink timing of a cell other than the first cell, such as the second cell.

In some embodiments, the first drift value is determined by the network device of the first cell; or the first drift value is determined by the network device of the second cell.

In some embodiments, the first drift value corresponds to the second cell, or the first drift value is determined based on the downlink timing of the second cell.

In some embodiments, the first synchronization assistance information includes the satellite ephemeris information corresponding to the first cell. The satellite ephemeris information corresponding to the first cell is configured to determine the timing advance value of the serving link of the terminal device and the first cell. In some embodiments, the first synchronization assistance information includes the duration of the timer corresponding to the first cell. Starting from the first epoch time and prior to end of the duration of the timer corresponding to the first cell, the terminal device may assume that the satellite ephemeris information that corresponds to the first cell and is acquired by the terminal device is valid.

In some embodiments, the first synchronization assistance information does not include the common timing value parameter corresponding to the first cell. This is mainly because in the process of performing the mobility management on the first cell, the network device may compensate for a timing advance value offset between the feeder link of the first cell and a feeder link of the second cell when configuring the position of the SMTC occasion and/or the position of the RMTC occasion, such that there is no need to indicate the common timing value parameter corresponding to the first cell by using the first synchronization assistance information.

In some embodiments, the terminal device receives the first synchronization assistance information corresponding to the first cell and initiates the handover procedure to the first cell based on the first synchronization assistance information. The first synchronization assistance information corresponds to the first epoch time, and the first epoch time corresponds to the first cell, or the first epoch time is determined based on the downlink timing of the first cell. The first cell is the target cell of the terminal device, and the second cell is the source cell (namely, the serving cell) of the terminal device.

In some embodiments, the first epoch time is the start or end time of the first time unit. That the first epoch time corresponds to the first cell, or the first epoch time is determined based on the downlink timing of the first cell may mean that the first time unit corresponds to the first cell, or the first epoch time is determined based on the downlink timing of the first cell.

In some embodiments, the first synchronization assistance information is transmitted by the network device of the first cell to the network device of the second cell, and then forwarded by the network device of the second cell to the terminal device. The first epoch time is determined by the network device of the first cell based on the downlink timing of the first cell.

In some embodiments, the first synchronization assistance information includes the first epoch time indication information, wherein the first epoch time indication information indicates the first time unit determined based on the downlink timing of the first cell. Specifically, the first time unit is the first downlink subframe, and the first epoch time indication information indicates the SFN and the subframe number that correspond to the first downlink subframe and are determined based on the downlink timing of the first cell. Alternatively, the first epoch time indication information indicates the SFN and the subframe number that correspond to the second downlink subframe and are determined based on the downlink timing of the first cell, and the first drift value, wherein the first downlink subframe is determined based on the second downlink subframe and the first drift value. This is mainly because the terminal device needs to determine uplink time-domain and/or frequency-domain synchronization between the terminal device and the first cell based on the first synchronization assistance information in the process of initiating a handover procedure to the first cell. In other words, the terminal device needs to acquire the downlink timing of the first cell, and therefore the terminal device may determine the first epoch time based on the downlink timing of the first cell.

In some embodiments, the first drift value is determined by the network device of the first cell; or the first drift value is determined by the network device of the second cell.

In some embodiments, the first drift value corresponds to the second cell, or the first drift value is determined based on the downlink timing of the second cell.

In some embodiments, the first drift value corresponds to the first cell, or the first drift value is determined based on the downlink timing of the first cell.

In some embodiments, the first synchronization assistance information includes the satellite ephemeris information corresponding to the first cell and the common timing value parameter corresponding to the first cell. The satellite ephemeris information corresponding to the first cell is configured to determine the timing advance value of the serving link of the terminal device and the first cell. The common timing value parameter corresponding to the first cell is configured to determine the timing advance value of the feeder link of the first cell. In some embodiments, the first synchronization assistance information includes the duration of the timer corresponding to the first cell. Starting from the first epoch time and prior to end of the duration of the timer corresponding to the first cell, the terminal device may assume that the satellite ephemeris information and the common timing value parameter that correspond to the first cell and are acquired by the terminal device are valid.

In some embodiments, the terminal device receives the first synchronization assistance information corresponding to the first cell and initiates the handover procedure to the first cell based on the first synchronization assistance information. The first synchronization assistance information corresponds to the first epoch time, and the first epoch time corresponds to the second cell, or the first epoch time is determined based on the downlink timing of the second cell. The first cell is the target cell of the terminal device, and the second cell is the source cell (namely, the serving cell) of the terminal device.

In some embodiments, the first epoch time is the start or end time of the first time unit. That the first epoch time corresponds to the second cell, or the first epoch time is determined based on the downlink timing of the second cell may mean that the first time unit corresponds to the second cell, or the first time unit is determined based on the downlink timing of the second cell.

In some embodiments, the first synchronization assistance information is transmitted by the network device of the first cell to the network device of the second cell, and then transmitted by the network device of the second cell to the terminal device. In some embodiments, the first epoch time is determined by the network device of the first cell based on the downlink timing of the second cell. Alternatively, the first epoch time is determined by the network device of the first cell based on the downlink timing of the first cell, and converted by the network device of the second cell into the corresponding downlink timing of the second cell.

In some embodiments, the first synchronization assistance information includes the first epoch time indication information, wherein the first epoch time indication information indicates the first time unit determined based on the downlink timing of the second cell. Specifically, the first time unit is the first downlink subframe, and the first epoch time indication information indicates the SFN and the subframe number that correspond to the first downlink subframe and are determined based on the downlink timing of the second cell. Alternatively, the first epoch time indication information indicates the SFN and the subframe number that correspond to the second downlink subframe and are determined based on the downlink timing of the second cell, and the first drift value, wherein the first downlink subframe is determined based on the second downlink subframe and the first drift value. In this example, in the process of initiating a handover to the first cell, the terminal device can directly determine the first epoch time based on the downlink timing of the second cell (serving cell) instead of by acquiring the downlink timing of the first cell first, so as to determine the uplink time-domain and/or frequency-domain synchronization between the terminal device and the first cell based on the first synchronization assistance information. In this way, a delay in the handover procedure is reduced.

In some embodiments, the first drift value is determined by the network device of the first cell; or the first drift value is determined by the network device of the second cell.

In some embodiments, the first drift value corresponds to the second cell, or the first drift value is determined based on the downlink timing of the second cell.

In some embodiments, the first drift value corresponds to the first cell, or the first drift value is determined based on the downlink timing of the first cell.

In some embodiments, the first synchronization assistance information includes the satellite ephemeris information corresponding to the first cell and the common timing value parameter corresponding to the first cell. The satellite ephemeris information corresponding to the first cell is configured to determine the timing advance value of the serving link of the terminal device and the first cell. The common timing value parameter corresponding to the first cell is configured to determine the timing advance value of the feeder link of the first cell. In some embodiments, the first synchronization assistance information includes the duration of the timer corresponding to the first cell. From a start of the first epoch time to an end of the duration of the timer corresponding to the first cell, the terminal device may assume that the satellite ephemeris information and the common timing value parameter that correspond to the first cell and are acquired by the terminal device are valid.

In the technical solutions according to the embodiments of the present disclosure, synchronization assistance information of another cell (for example, a neighboring cell) other than a serving cell is acquired by a terminal device, and an epoch time (epoch time) corresponding to the synchronization assistance information of the another cell (for example, the neighboring cell) is further determined. Therefore, the terminal device is capable of determining synchronization information of the another cell (for example, the neighboring cell) based on the synchronization assistance information of the another cell (for example, the neighboring cell). In this way, the terminal device is capable of determining a time position of a measurement time window of the another cell (for example, the neighboring cell) in the process of performing measurement and mobility management on the another cell (for example, the neighboring cell), or complete uplink time-domain and/or frequency-domain synchronization with a target cell in the process of performing a handover to the another cell (for example, the neighboring cell, which is also referred to as the target cell), thereby helping to improve system efficiency.

In addition, in the case that the synchronization assistance information includes epoch time indication information, an epoch time corresponding to the synchronization assistance information of the another cell (for example, the neighboring cell) may be determined based on information indicated by the epoch time indication information. In the case that the synchronization assistance information does not include the epoch time indication information, the epoch time corresponding to the synchronization assistance information of the another cell (for example, the neighboring cell) may also be determined in another manner. The embodiments of the present disclosure provide a plurality of manners of determining the epoch time corresponding to the synchronization assistance information of the another cell (for example, the neighboring cell), making the solutions more perfect.

It should be noted that the above processes executed by the terminal device can be separately implemented as a method for wireless communication on a terminal device side, and the processes performed by the network device may be separately implemented as a method for wireless communication on a network device side.

The following embodiments of the present disclosure illustrates apparatuses for wireless communication, which are capable of carrying out the method embodiments of the present disclosure. For details not disclosed in the apparatus embodiments of the present disclosure, reference may be made to the method embodiments of the present disclosure.

FIG. 6 is a block diagram of an apparatus for wireless communication according to some embodiments of the present disclosure. The apparatus may implement the above method examples on the terminal device side. The function may be implemented by hardware or by hardware executing corresponding software. The apparatus may be the terminal device described above or may be provided in the terminal device. As shown in FIG. 6, the apparatus 600 may include a receiving module 610 and a processing module 620.

The receiving module 610 is configured to receive first synchronization assistance information, wherein the first synchronization assistance information is synchronization assistance information corresponding to a first cell, and the first synchronization assistance information includes at least one of satellite ephemeris information corresponding to the first cell, a common timing value parameter corresponding to the first cell, first epoch time indication information, or a duration of a timer corresponding to the first cell, wherein the first epoch time indication information is configured to determine a first epoch time corresponding to the first synchronization assistance information, and the first cell is not a serving cell of the terminal device.

The processing module 620 is configured to perform mobility management on the first cell based on the first synchronization assistance information, and/or initiate a handover procedure to the first cell based on the first synchronization assistance information.

In some embodiments, that the first epoch time indication information is configured to determine the first epoch time corresponding to the first synchronization assistance information includes: the first epoch time indication information indicates a first time unit, and the first epoch time is a start or end time of the first time unit.

In some embodiments, the first time unit is a first downlink subframe, and that the first epoch time indication information indicates the first time unit includes: the first epoch time indication information indicates an SFN and a subframe number that correspond to the first downlink subframe; or the first epoch time indication information indicates an SFN and a subframe number that correspond to a second downlink subframe, and a first drift value, wherein the first downlink subframe is determined based on the second downlink subframe and the first drift value.

In some embodiments, the first time unit is a first downlink slot, and that the first epoch time indication information indicates the first time unit includes: the first epoch time indication information indicates an SFN and a slot number that correspond to the first downlink slot; or the first epoch time indication information indicates an SFN and a slot number that correspond to a second downlink slot, and a first drift value, wherein the first downlink slot is determined based on the second downlink slot and the first drift value.

In some embodiments, a unit of the first drift value is one of subframe, slot, symbol, half frame, frame, millisecond, or microsecond.

In some embodiments, the first time unit corresponds to a second cell, or the first time unit is determined based on a downlink timing of the second cell, wherein the second cell is the serving cell of the terminal device. Alternatively, the first time unit corresponds to the first cell, or the first time unit is determined based on a downlink timing of the first cell.

In some embodiments, that the first epoch time indication information is configured to determine the first epoch time corresponding to the first synchronization assistance information includes: the first epoch time indication information indicates a second drift value, and the first epoch time is determined based on the second drift value.

In some embodiments, that the first epoch time is determined based on the second drift value includes: the first epoch time is determined based on the second drift value and second epoch time, wherein the second epoch time is an epoch time corresponding to second synchronization assistance information; or the first epoch time is determined based on the second drift value and second epoch time, wherein the second epoch time is a time determined in accordance with a predefined rule; or the first epoch time is determined based on the second drift value and a second time unit, wherein the second time unit is a time unit corresponding to second epoch time, and the second epoch time is an epoch time corresponding to second synchronization assistance information; or the first epoch time is determined based on the second drift value and a second time unit, wherein the second time unit is a time unit determined in accordance with a predefined rule.

In some embodiments, a unit of the second drift value is one of subframe, slot, symbol, half frame, frame, millisecond, or microsecond.

In some embodiments, in the case that the first synchronization assistance information does not include the first epoch time indication information, the first epoch time is determined in one of following manners:
the first epoch time is a time determined in accordance with a predefined rule; or
the first epoch time is the same as the second epoch time, wherein the second epoch time is the epoch time corresponding to the second synchronization assistance information; or
the first epoch time is determined based on a third drift value and the second epoch time, wherein the second epoch time is the epoch time corresponding to the second synchronization assistance information; or
the first epoch time is determined based on a third drift value and the second epoch time, wherein the second epoch time is the time determined in accordance with the predefined rule; or
the first epoch time is a start or end time of the second time unit, wherein the second time unit is the time unit corresponding to the second epoch time, and the second epoch time is the epoch time corresponding to the second synchronization assistance information; or
the first epoch time is a start or end time of the second time unit, wherein the second time unit is the time unit determined in accordance with the predefined rule; or
the first epoch time is determined based on a third drift value and the second time unit, wherein the second time unit is the time unit corresponding to the second epoch time, and the second epoch time is the epoch time corresponding to the second synchronization assistance information; or
the first epoch time is determined based on a third drift value and the second time unit, wherein the second time unit is the time unit determined in accordance with the predefined rule.

In some embodiments, a unit of the third drift value is one of the subframe, the slot, the symbol, the half frame, the frame, the millisecond, or the microsecond.

In some embodiments, the third drift value is preset or determined based on configuration information of a network device.

In some embodiments, the second epoch time corresponds to the second cell, or the second epoch time is determined based on the downlink timing of the second cell;
Alternatively, the second epoch time corresponds to the first cell, or the second epoch time is determined based on the downlink timing of the first cell.

Alternatively, the second time unit corresponds to the second cell, or the second time unit is determined based on the downlink timing of the second cell.

Alternatively, the second time unit corresponds to the first cell, or the second time unit is determined based on the downlink timing of the first cell.

In some embodiments, the second synchronization assistance information is synchronization assistance information corresponding to the second cell. The second cell is the serving cell of the terminal device; or the second cell is not the serving cell of the terminal device, and the first cell is different from the second cell.

In some embodiments, the second synchronization assistance information includes at least one of satellite ephemeris information corresponding to the second cell, a common timing value parameter corresponding to the second cell, second epoch time indication information, or a duration of a timer corresponding to the second cell, wherein the second epoch time indication information is configured to determine the second epoch time.

In some embodiments, in the case that the second synchronization assistance information does not include the second epoch time indication information, the second epoch time is the time determined in accordance with the predefined rule.

In some embodiments, the receiving module 610 is configured to receive the first synchronization assistance information over a network device of the second cell, wherein the second cell is the serving cell of the terminal device.

In some embodiments, the first synchronization assistance information is transmitted by a network device of the first cell to the network device of the second cell, wherein the first cell is a neighboring cell of the terminal device, or the first cell is a target cell to which the terminal device initiates the handover procedure.

In some embodiments, the processing module 620 is configured to determine a position of an SMTC occasion corresponding to the first cell based on the first synchronization assistance information, and perform RRM measurement on the first cell based on the SMTC occasion.

In some embodiments, the processing module 620 is configured to determine a position of an RMTC occasion corresponding to the first cell based on the first synchronization assistance information, and perform RSSI measurement on the first cell based on the RMTC occasion.

In some embodiments, the processing module 620 is configured to determine uplink timing advance information corresponding to the first cell based on the first synchronization assistance information, and initiate the handover procedure to the first cell based on the uplink timing advance information corresponding to the first cell.

In some embodiments, a reference point of the first epoch time is an uplink time synchronization reference point of the first cell; or a reference point of the first epoch time is an uplink time synchronization reference point of the second cell, wherein the second cell is the serving cell of the terminal device.

In some embodiments, the common timing value parameter corresponding to the first cell includes at least one of a common timing value, a drift value of the common timing value, or a variation rate of the drift value of the common timing value.

In some embodiments, the satellite ephemeris information corresponding to the first cell is in a first format, in a second format, or in both first and second formats.

The satellite ephemeris information corresponding to the first cell in the first format includes: an X-axis parameter of a position of a satellite corresponding to the first cell, a Y-axis parameter of the position of the satellite corresponding to the first cell, a Z-axis parameter of the position of the satellite corresponding to the first cell, an X-axis parameter of a velocity of the satellite corresponding to the first cell, a Y-axis parameter of the velocity of the satellite corresponding to the first cell, and a Z-axis parameter of the velocity of the satellite corresponding to the first cell.

The satellite ephemeris information corresponding to the first cell in the second format includes: a semi-major axis of the satellite corresponding to the first cell, eccentricity of the satellite corresponding to the first cell, an argument of periapsis of the satellite corresponding to the first cell, a longitude of an ascending node of the satellite corresponding to the first cell, an inclination of the satellite corresponding to the first cell, and a mean anomaly of the satellite corresponding to the first cell at the first epoch time.

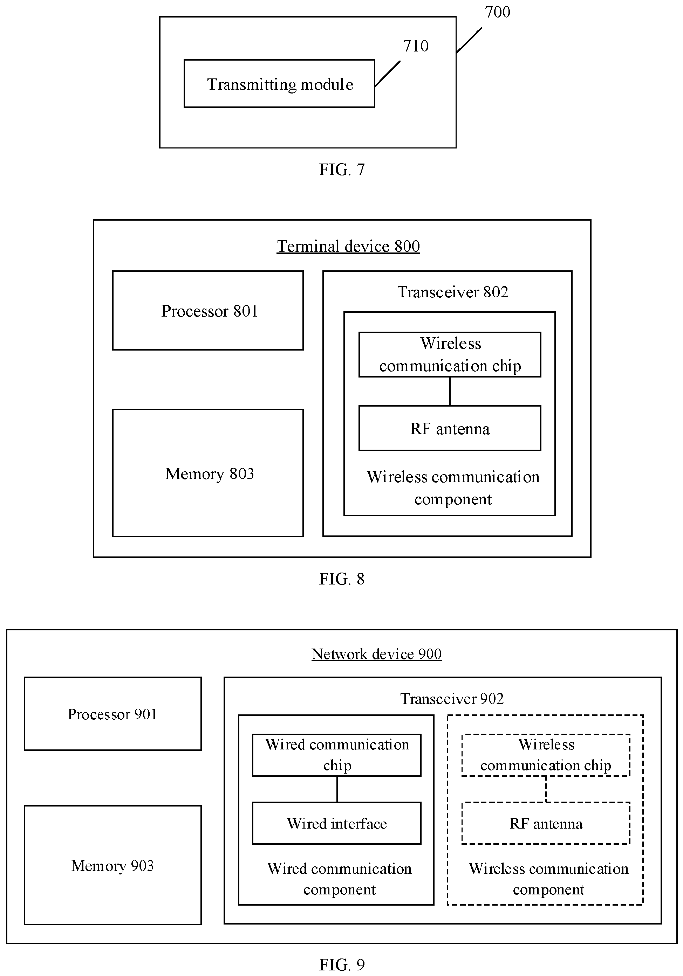

FIG. 7 is a block diagram of An apparatus for wireless communication according to another embodiment of the present disclosure. The apparatus may implement the above method examples on the network device side. The function may be implemented by hardware or by hardware executing corresponding software. The apparatus may be the network device described above or may be provided in the network device. As shown in FIG. 7, the apparatus 700 may include a transmitting module 710.

The transmitting module 710 is configured to transmit first synchronization assistance information to a terminal device, wherein the first synchronization assistance information is synchronization assistance information corresponding to a first cell, and the first synchronization assistance information includes at least one of satellite ephemeris information corresponding to the first cell, a common timing value parameter corresponding to the first cell, first epoch time indication information, or a duration of a timer corresponding to the first cell, wherein the first epoch time indication information is configured to determine a first epoch time corresponding to the first synchronization assistance information, and the first cell is not a serving cell of the terminal device.

The first synchronization assistance information is used by the terminal device to perform mobility management on the first cell, and/or the first synchronization assistance information is used by the terminal device to initiate a handover procedure to the first cell.

In some embodiments, that the first epoch time indication information is configured to determine the first epoch time corresponding to the first synchronization assistance information includes: the first epoch time indication information indicates a first time unit, and the first epoch time is a start or end time of the first time unit.

In some embodiments, the first time unit is a first downlink subframe, and that the first epoch time indication information indicates the first time unit includes: the first epoch time indication information indicates an SFN and a subframe number that correspond to the first downlink subframe; or the first epoch time indication information indicates an SFN and a subframe number that correspond to a second downlink subframe, and a first drift value, wherein the first downlink subframe is determined based on the second downlink subframe and the first drift value.

In some embodiments, the first time unit is a first downlink slot, and that the first epoch time indication information indicates the first time unit includes: the first epoch time indication information indicates an SFN and a slot number that correspond to the first downlink slot; or the first epoch time indication information indicates an SFN and a slot number that correspond to a second downlink slot, and a first drift value, wherein the first downlink slot is determined based on the second downlink slot and the first drift value.

In some embodiments, a unit of the first drift value is one of subframe, slot, symbol, half frame, frame, millisecond, or microsecond.

In some embodiments, the first time unit corresponds to a second cell, or the first time unit is determined based on a downlink timing of the second cell, wherein the second cell is the serving cell of the terminal device. Alternatively, the first time unit corresponds to the first cell, or the first time unit is determined based on a downlink timing of the first cell.

In some embodiments, that the first epoch time indication information is configured to determine the first epoch time corresponding to the first synchronization assistance information includes: the first epoch time indication information indicates a second drift value, and the first epoch time is determined based on the second drift value.

In some embodiments, that the first epoch time is determined based on the second drift value includes: the first epoch time is determined based on the second drift value and second epoch time, wherein the second epoch time is an epoch time corresponding to second synchronization assistance information; or the first epoch time is determined based on the second drift value and second epoch time, wherein the second epoch time is a time determined in accordance with a predefined rule; or the first epoch time is determined based on the second drift value and a second time unit, wherein the second time unit is a time unit corresponding to second epoch time, and the second epoch time is an epoch time corresponding to second synchronization assistance information; or the first epoch time is determined based on the second drift value and a second time unit, wherein the second time unit is a time unit determined in accordance with a predefined rule.

In some embodiments, a unit of the second drift value is one of subframe, slot, symbol, half frame, frame, millisecond, or microsecond.

In some embodiments, in the case that the first synchronization assistance information does not include the first epoch time indication information, the first epoch time is determined in one of following manners:
the first epoch time is a time determined in accordance with a predefined rule; or
the first epoch time is the same as the second epoch time, wherein the second epoch time is the epoch time corresponding to the second synchronization assistance information; or
the first epoch time is determined based on a third drift value and the second epoch time, wherein the second epoch time is the epoch time corresponding to the second synchronization assistance information; or
the first epoch time is determined based on a third drift value and the second epoch time, wherein the second epoch time is the time determined in accordance with the predefined rule; or
the first epoch time is a start or end time of the second time unit, wherein the second time unit is the time unit corresponding to the second epoch time, and the second epoch time is the epoch time corresponding to the second synchronization assistance information; or
the first epoch time is a start or end time of the second time unit, wherein the second time unit is the time unit determined in accordance with the predefined rule; or
the first epoch time is determined based on a third drift value and the second time unit, wherein the second time unit is the time unit corresponding to the second epoch time, and the second epoch time is the epoch time corresponding to the second synchronization assistance information; or
the first epoch time is determined based on a third drift value and the second time unit, wherein the second time unit is the time unit determined in accordance with the predefined rule.

In some embodiments, a unit of the third drift value is one of subframe, slot, symbol, half frame, frame, millisecond, or microsecond.

In some embodiments, the third drift value is preset or determined based on configuration information of the network device.

In some embodiments, the second epoch time corresponds to the second cell, or the second epoch time is determined based on the downlink timing of the second cell;
In some embodiments, the second epoch time corresponds to the first cell, or the second epoch time is determined based on the downlink timing of the first cell.

In some embodiments, the second time unit corresponds to the second cell, or the second time unit is determined based on the downlink timing of the second cell.

In some embodiments, the second time unit corresponds to the first cell, or the second time unit is determined based on the downlink timing of the first cell.

In some embodiments, the second synchronization assistance information is synchronization assistance information corresponding to the second cell. The second cell is the serving cell of the terminal device; or the second cell is not the serving cell of the terminal device, and the first cell is different from the second cell.

In some embodiments, the second synchronization assistance information includes at least one of satellite ephemeris information corresponding to the second cell, a common timing value parameter corresponding to the second cell, second epoch time indication information, or a duration of a timer corresponding to the second cell, wherein the second epoch time indication information is configured to determine the second epoch time.

In some embodiments, in the case that the second synchronization assistance information does not include the second epoch time indication information, the second epoch time is the time determined in accordance with the predefined rule.

In some embodiments, the first synchronization assistance information is transmitted by a network device of the second cell to the terminal device, wherein the second cell is the serving cell of the terminal device.

In some embodiments, the first synchronization assistance information is transmitted by a network device of the first cell to the network device of the second cell, wherein the first cell is a neighboring cell of the terminal device, or the first cell is a target cell to which the terminal device initiates the handover procedure.

In some embodiments, that the first synchronization assistance information is used by the terminal device to perform the mobility management on the first cell includes: the first synchronization assistance information is used by the terminal device to determine a position of an SMTC occasion corresponding to the first cell, and perform RRM measurement on the first cell based on the SMTC occasion.

In some embodiments, that the first synchronization assistance information is used by the terminal device to perform the mobility management on the first cell includes: the first synchronization assistance information is used by the terminal device to determine a position of an RMTC occasion corresponding to the first cell, and perform RSSI measurement on the first cell based on the RMTC occasion.

In some embodiments, that the first synchronization assistance information is used by the terminal device to initiate the handover procedure to the first cell includes: the first synchronization assistance information is used by the terminal device to determine uplink timing advance information corresponding to the first cell, and initiate the handover procedure to the first cell based on the uplink timing advance information corresponding to the first cell.

In some embodiments, a reference point of the first epoch time is an uplink time synchronization reference point of the first cell; or a reference point of the first epoch time is an uplink time synchronization reference point of the second cell, wherein the second cell is the serving cell of the terminal device.

In some embodiments, the common timing value parameter corresponding to the first cell includes at least one of a common timing value, a drift value of the common timing value, or a variation rate of the drift value of the common timing value.

In some embodiments, the satellite ephemeris information corresponding to the first cell is in a first format, in a second format, or in both first and second formats.

The satellite ephemeris information corresponding to the first cell in the first format includes: an X-axis parameter of a position of a satellite corresponding to the first cell, a Y-axis parameter of the position of the satellite corresponding to the first cell, a Z-axis parameter of the position of the satellite corresponding to the first cell, an X-axis parameter of a velocity of the satellite corresponding to the first cell, a Y-axis parameter of the velocity of the satellite corresponding to the first cell, and a Z-axis parameter of the velocity of the satellite corresponding to the first cell.

The satellite ephemeris information corresponding to the first cell in the second format includes: a semi-major axis of the satellite corresponding to the first cell, eccentricity of the satellite corresponding to the first cell, an argument of periapsis of the satellite corresponding to the first cell, a longitude of an ascending node of the satellite corresponding to the first cell, an inclination of the satellite corresponding to the first cell, and a mean anomaly of the satellite corresponding to the first cell at the first epoch time.

It should be noted that when the apparatus according to the above embodiments implements its functions, division of the functional modules is merely used as an example. In practice, the functions may be assigned to and completed by different functional modules as required, that is, an internal structure of the apparatus is divided into different functional modules to complete all or some of the functions.

Specific manners of performing operations by the modules in the apparatus in the above embodiments have been described in detail in the embodiments of the related method, and details are not described herein again.

FIG. 8 is a schematic structural diagram of a terminal device 800 according to some embodiments of the present disclosure. The terminal device 800 may be configured to perform the method processes performed by the terminal device in the above embodiments. The terminal device 800 may include a processor 801, a transceiver 802, and a memory 803.

The processor 801 includes one or more processing cores. The processor 801 runs various functional applications and performs information processing by running software programs and modules.

The transceiver 802 may include a receiver and a transmitter. For example, the receiver and the transmitter may be practiced as a same wireless communication component, and the wireless communication component may include a wireless communication chip and a radio frequency (RF) antenna.

The memory 803 is communicably connected to the processor 801 and the transceiver 802.

The memory 803 is configured to store one or more computer programs executed by the processor. The processor 801 is configured to execute the one or more computer programs to perform each process performed by the terminal device in the above method embodiments.

In addition, the memory 803 may be implemented by any type of volatile or non-volatile storage device or a combination thereof. The volatile or non-volatile storage device includes but not limited to: a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In some exemplary embodiments, the transceiver 802 is configured to receive first synchronization assistance information, wherein the first synchronization assistance information is synchronization assistance information corresponding to a first cell, and the first synchronization assistance information includes at least one of satellite ephemeris information corresponding to the first cell, a common timing value parameter corresponding to the first cell, first epoch time indication information, or a duration of a timer corresponding to the first cell, wherein the first epoch time indication information is configured to determine a first epoch time corresponding to the first synchronization assistance information, and the first cell is not a serving cell of the terminal device.

The processor 801 is configured to perform mobility management on the first cell based on the first synchronization assistance information, and/or initiate a handover procedure to the first cell based on the first synchronization assistance information.

For details not detailed in the above embodiments, reference may be made to the description in the above method embodiments, which are not described herein any further.

FIG. 9 is a schematic structural diagram of a network device 900 according to some embodiments of the present disclosure. The network device 900 is configured to perform the method processes performed by the network device in the above embodiments. The network device 900 may include a processor 901, a transceiver 902, and a memory 903.

The processor 901 includes one or more processing cores. The processor 901 runs various functional applications and perform information processing by running software programs and modules.

The transceiver 902 may include a receiver and a transmitter. For example, the transceiver 902 may include a wired communication component, and the wired communication component may include a wired communication chip and a wired interface (for example, a fiber interface). In some embodiments, the transceiver 902 may also include a wireless communication component, and the wireless communication component may include a wireless communication chip and an RF antenna.

The memory 903 is connected to the processor 901 and the transceiver 902.

The memory 903 is configured to store one or more computer programs executed by the processor. The processor 901 is configured to execute the one or more computer programs to perform each process performed by the network device in the above method embodiments.

In addition, the memory 903 may be implemented by any type of volatile or non-volatile storage device or a combination thereof. The volatile or non-volatile storage device includes but not limited to: a magnetic disk or an optical disc, an EEPROM, an EPROM, an SRAM, a ROM, a magnetic memory, a flash memory, and a PROM.

In some exemplary embodiments, the transceiver 902 is configured to transmit first synchronization assistance information to a terminal device, wherein the first synchronization assistance information is synchronization assistance information corresponding to a first cell, and the first synchronization assistance information includes at least one of satellite ephemeris information corresponding to the first cell, a common timing value parameter corresponding to the first cell, first epoch time indication information, or a duration of a timer corresponding to the first cell, wherein the first epoch time indication information is configured to determine a first epoch time corresponding to the first synchronization assistance information, and the first cell is not a serving cell of the terminal device.

The first synchronization assistance information is used by the terminal device to perform mobility management on the first cell, and/or the first synchronization assistance information is used by the terminal device to initiate a handover procedure to the first cell.

For details not detailed in the above embodiments, reference may be made to the description in the above method embodiments, which are not described herein any further.

Some embodiments of the present disclosure further provide a computer-readable storage medium. The storage medium stores one or more computer programs. The one or more computer programs, when loaded and run by a processor of a terminal device, cause the terminal device to perform the above method for wireless communication on the terminal device side.

The embodiments of the present disclosure further provide a computer-readable storage medium. The storage medium stores one or more computer programs. The one or more computer programs, when loaded and run by a processor of a network device, cause the network device to perform the above method for wireless communication on the network device side.

In some embodiments, the computer-readable storage medium may include a ROM, a RAM, a solid-state drive (SSD), an optical disc, or the like. The RAM may include a resistance random access memory (ReRAM) and a dynamic random access memory (DRAM).

The embodiments of the present disclosure further provide a chip. The chip includes a programmable logic circuit and/or one or more program instructions. The chip, when running on a terminal device, is caused to perform the above method for wireless communication on the terminal device side.

The embodiments of the present disclosure further provide a chip, including a programmable logic circuit and/or a program instruction. The chip, when running on a network device, is caused to perform the above method for wireless communication on the network device side.

The embodiments of the present disclosure further provide a computer program product or a computer program. The computer program product or the computer program includes one or more computer instructions. The one or more computer instructions are stored in a computer-readable storage medium. The one or more computer instructions, when read from the computer-readable storage medium and executed by a processor of a terminal device, cause the terminal device to perform the above method for wireless communication on the terminal device side.

The embodiments of the present disclosure further provide a computer program product or a computer program. The computer program product or the computer program includes one or more computer instructions. The one or more computer instructions are stored in a computer-readable storage medium. The one or more computer instructions, when read from the computer-readable storage medium and executed by a processor of a network device, cause the network device to perform the above method for wireless communication on the network device side.

It should be understood that the term "a plurality of" described herein means two or more. The term "and/or" describes an association relationship of associated objects, and indicates three types of relationships. For example, the phrase "A and/or B" means (A), (B), or (A and B). The character "/" usually indicates an "or" relationship between the associated objects.

In addition, serial numbers of the processes described herein only show an exemplary possible execution sequence among the processes. In some other embodiments, the above processes may also be executed without following a numbering sequence. For example, two processes with different numbers are executed simultaneously or in a reverse order to the sequence shown in the figures, which is not limited in the embodiments of the present disclosure.

Those skilled in the art should understand that in one or more of the above embodiments, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium, wherein the communication medium includes any medium that facilitates transfer of a computer program from one place to another. The storage medium may be any usable medium accessible by a general-purpose computer or a special-purpose computer.

## Claims

1. A method for wireless communication, comprising:
receiving (510), by a terminal device, first synchronization assistance information, wherein the first synchronization assistance information is synchronization assistance information corresponding to a first cell, and the first synchronization assistance information comprises satellite ephemeris information corresponding to the first cell, a common timing value parameter corresponding to the first cell, first epoch time indication information, and a duration of a timer corresponding to the first cell, wherein the first epoch time indication information is configured to determine a first epoch time corresponding to the first synchronization assistance information, and the first cell is not a serving cell of the terminal device; and
performing (520), by the terminal device, mobility management on the first cell based on the first synchronization assistance information, comprising:
determining a position of a synchronization signal, SS/physical broadcast channel, PBCH, block measurement timing configuration, SMTC, occasion corresponding to the first cell based on the first synchronization assistance information, and performing radio resource management, RRM, measurement on the first cell based on the SMTC occasion;
wherein the first epoch time indication information indicates a system frame number, SFN, and a subframe number that correspond to a first downlink subframe, and the first epoch time is a start or end time of the first downlink subframe;
wherein the first downlink subframe is determined based on a downlink timing of the second cell, wherein the second cell is the serving cell of the terminal device; or the first downlink subframe corresponds to the first cell, or the first downlink subframe is determined based on a downlink timing of the first cell.

2. The method according to claim 1, wherein
a reference point of the first epoch time is an uplink time synchronization reference point of the first cell; or
a reference point of the first epoch time is an uplink time synchronization reference point of a second cell, wherein the second cell is the serving cell of the terminal device.

3. The method according to claim 1, wherein receiving (510), by the terminal device, the first synchronization assistance information comprises:
receiving the first synchronization assistance information over a network device of a second cell, wherein the second cell is the serving cell of the terminal device.

4. The method according to claim 3, wherein the first synchronization assistance information is transmitted by a network device of the first cell to the network device of the second cell, wherein the first cell is a neighboring cell of the terminal device, or the first cell is a target cell to which the terminal device initiates a handover procedure.

5. A method for wireless communication, the method being performed by a terminal device and a network device, the method comprising:
transmitting, by the network device, first synchronization assistance information to the terminal device, wherein the first synchronization assistance information is synchronization assistance information corresponding to a first cell, and the first synchronization assistance information comprises satellite ephemeris information corresponding to the first cell, a common timing value parameter corresponding to the first cell, first epoch time indication information, and a duration of a timer corresponding to the first cell, wherein the first epoch time indication information is configured to determine a first epoch time corresponding to the first synchronization assistance information, and the first cell is not a serving cell of the terminal device;
receiving, by the terminal device, the first synchronization assistance information; and
performing, by the terminal device, mobility management on the first cell based on the first synchronization assistance information, comprising: determining a position of a synchronization signal, SS/physical broadcast channel, PBCH, block measurement timing configuration, SMTC, occasion corresponding to the first cell based on the first synchronization assistance information, and performing radio resource management, RRM, measurement on the first cell based on the SMTC occasion;
wherein the first epoch time indication information indicates a system frame number, SFN, and a subframe number that correspond to a first downlink subframe, and the first epoch time is a start or end time of the first downlink subframe;
wherein the first downlink subframe is determined based on a downlink timing of the second cell, wherein the second cell is the serving cell of the terminal device; or the first downlink subframe corresponds to the first cell, or the first downlink subframe is determined based on a downlink timing of the first cell.

6. The method according to claim 5, wherein
a reference point of the first epoch time is an uplink time synchronization reference point of the first cell; or
a reference point of the first epoch time is an uplink time synchronization reference point of a second cell, wherein the second cell is the serving cell of the terminal device.

7. The method according to claim 5, wherein receiving, by the terminal device, the first synchronization assistance information comprises:
receiving the first synchronization assistance information over a network device of a second cell, wherein the second cell is the serving cell of the terminal device.

8. The method according to claim 7, wherein the first synchronization assistance information is transmitted by a network device of the first cell to the network device of the second cell, wherein the first cell is a neighboring cell of the terminal device, or the first cell is a target cell to which the terminal device initiates a handover procedure.

9. The method according to claim 5 or 6, wherein the common timing value parameter corresponding to the first cell comprises at least one of a common timing value, a drift value of the common timing value, or a variation rate of the drift value of the common timing value; wherein the satellite ephemeris information corresponding to the first cell is in a first format, in a second format, or in both first and second formats; wherein
the satellite ephemeris information corresponding to the first cell in the first format comprises: an X-axis parameter of a position of a satellite corresponding to the first cell, a Y-axis parameter of the position of the satellite corresponding to the first cell, a Z-axis parameter of the position of the satellite corresponding to the first cell, an X-axis parameter of a velocity of the satellite corresponding to the first cell, a Y-axis parameter of the velocity of the satellite corresponding to the first cell, and a Z-axis parameter of the velocity of the satellite corresponding to the first cell; and
the satellite ephemeris information corresponding to the first cell in the second format comprises: a semi-major axis of the satellite corresponding to the first cell, eccentricity of the satellite corresponding to the first cell, an argument of periapsis of the satellite corresponding to the first cell, a longitude of an ascending node of the satellite corresponding to the first cell, an inclination of the satellite corresponding to the first cell, and a mean anomaly of the satellite corresponding to the first cell at the first epoch time.

10. An apparatus (600) for wireless communication, the apparatus being a terminal device, comprising:
a receiving module (610), configured to receive first synchronization assistance information, wherein the first synchronization assistance information is synchronization assistance information corresponding to a first cell, and the first synchronization assistance information comprises satellite ephemeris information corresponding to the first cell, a common timing value parameter corresponding to the first cell, first epoch time indication information, and a duration of a timer corresponding to the first cell, wherein the first epoch time indication information is configured to determine a first epoch time corresponding to the first synchronization assistance information, and the first cell is not a serving cell of a terminal device; and
a processing module (620), configured to perform mobility management on the first cell based on the first synchronization assistance information;
wherein the processing module (620) is configured to:
determine a position of a synchronization signal, SS/physical broadcast channel, PBCH, block measurement timing configuration, SMTC, occasion corresponding to the first cell based on the first synchronization assistance information, and perform radio resource management, RRM, measurement on the first cell based on the SMTC occasion;
wherein the first epoch time indication information indicates a system frame number, SFN, and a subframe number that correspond to a first downlink subframe, and the first epoch time is a start or end time of the first downlink subframe;
wherein the first downlink subframe is determined based on a downlink timing of the second cell, wherein the second cell is the serving cell of the terminal device; or the first downlink subframe corresponds to the first cell, or the first downlink subframe is determined based on a downlink timing of the first cell.

11. The apparatus (600) according to claim 10, wherein the receiving module (610) is configured to:
receive the first synchronization assistance information over a network device of the second cell, wherein the second cell is the serving cell of the terminal device.

12. The apparatus (600) according to claim 11, wherein the first synchronization assistance information is transmitted by a network device of the first cell to the network device of the second cell, wherein the first cell is a neighboring cell of the terminal device, or the first cell is a target cell to which the terminal device initiates the handover procedure.

13. The apparatus (600) according to claim 10, wherein the processing module (620) is configured to:
determine uplink timing advance information corresponding to the first cell based on the first synchronization assistance information, and initiate the handover procedure to the first cell based on the uplink timing advance information corresponding to the first cell.

14. A system for wireless communication, the system comprising a transmitting module of a network device, and a receiving module and a processing module of a terminal device, wherein:
the transmitting module is configured to transmit first synchronization assistance information to a terminal device, wherein the first synchronization assistance information is synchronization assistance information corresponding to a first cell, and the first synchronization assistance information comprises satellite ephemeris information corresponding to the first cell, a common timing value parameter corresponding to the first cell, first epoch time indication information, and a duration of a timer corresponding to the first cell, wherein the first epoch time indication information is configured to determine a first epoch time corresponding to the first synchronization assistance information, and the first cell is not a serving cell of the terminal device;
the receiving module is configured to receive first synchronization assistance information; and
the processing module is configured to perform mobility management on the first cell based on the first synchronization assistance information;
the processing module is further configured to:
determine a position of a synchronization signal, SS/physical broadcast channel, PBCH, block measurement timing configuration, SMTC, occasion corresponding to the first cell based on the first synchronization assistance information, and perform radio resource management, RRM, measurement on the first cell based on the SMTC occasion;
wherein the first epoch time indication information indicates a system frame number, SFN, and a subframe number that correspond to a first downlink subframe, and the first epoch time is a start or end time of the first downlink subframe;
wherein the first downlink subframe is determined based on a downlink timing of the second cell, wherein the second cell is the serving cell of the terminal device; or the first downlink subframe corresponds to the first cell, or the first downlink subframe is determined based on a downlink timing of the first cell.

## Patentansprüche

1. Verfahren zur drahtlosen Kommunikation, umfassend:
das Empfangen (510), durch ein Endgerät, von ersten Synchronisationsunterstützungsinformationen, wobei die ersten Synchronisationsunterstützungsinformationen Synchronisationsunterstützungsinformationen sind, die einer ersten Zelle entsprechen, und die ersten Synchronisationsunterstützungsinformationen Satelliten-Ephemeriden-Informationen, die der ersten Zelle entsprechen, einen gemeinsamen Zeitsteuerungswertparameter, der der ersten Zelle entspricht, erste Epochenzeit-Anzeigeinformationen und eine Dauer eines Zeitgebers, der der ersten Zelle entspricht, umfassen, wobei die ersten Epochenzeit-Anzeigeinformationen dazu ausgelegt sind, eine erste Epochenzeit zu bestimmen, die den ersten Synchronisationsunterstützungsinformationen entspricht, und die erste Zelle keine dienende Zelle des Endgeräts ist; und
das Durchführen (520), durch das Endgerät, einer Mobilitätsverwaltung an der ersten Zelle auf Grundlage der ersten Synchronisationsunterstützungsinformationen, umfassend:
das Bestimmen einer Position einer Gelegenheit zur Messzeitkonfiguration von Synchronisationssignal/physikalischem Rundfunkkanal-Blöcken, SS/PBCH, SMTC, die der ersten Zelle entspricht, auf Grundlage der ersten Synchronisationsunterstützungsinformationen, und das Durchführen einer Funkressourcenverwaltungsmessung, RRM-Messung, an der ersten Zelle auf Grundlage der SMTC-Gelegenheit;
wobei die ersten Epochenzeit-Anzeigeinformationen eine Systemrahmennummer, SFN, und eine Teilrahmennummer angeben, die einem ersten Downlink-Teilrahmen entsprechen, und die erste Epochenzeit eine Anfangs- oder Endzeit des ersten Downlink-Teilrahmens ist;
wobei der erste Downlink-Teilrahmen auf Grundlage einer Downlink-Zeitsteuerung der zweiten Zelle bestimmt wird, wobei die zweite Zelle die dienende Zelle des Endgeräts ist; oder der erste Downlink-Teilrahmen der ersten Zelle entspricht, oder der erste Downlink-Teilrahmen auf Grundlage einer Downlink-Zeitsteuerung der ersten Zelle bestimmt wird.

2. Verfahren nach Anspruch 1, wobei
ein Referenzpunkt der ersten Epochenzeit ein Referenzpunkt der Uplink-Zeitsynchronisation der ersten Zelle ist; oder
ein Referenzpunkt der ersten Epochenzeit ein Referenzpunkt der Uplink-Zeitsynchronisation einer zweiten Zelle ist, wobei die zweite Zelle die dienende Zelle des Endgeräts ist.

3. Verfahren nach Anspruch 1, wobei das Empfangen (510), durch das Endgerät, der ersten Synchronisationsunterstützungsinformationen umfasst:
das Empfangen der ersten Synchronisationsunterstützungsinformationen über eine Netzwerkvorrichtung einer zweiten Zelle, wobei die zweite Zelle die dienende Zelle des Endgeräts ist.

4. Verfahren nach Anspruch 3, wobei die ersten Synchronisationsunterstützungsinformationen von einer Netzwerkvorrichtung der ersten Zelle an die Netzwerkvorrichtung der zweiten Zelle übertragen werden, wobei die erste Zelle eine Nachbarzelle des Endgeräts ist, oder die erste Zelle eine Zielzelle ist, zu der das Endgerät ein Handover-Verfahren einleitet.

5. Verfahren zur drahtlosen Kommunikation, wobei das Verfahren durch ein Endgerät und eine Netzwerkvorrichtung durchgeführt wird, das Verfahren umfassend:
das Übertragen, durch die Netzwerkvorrichtung, von ersten Synchronisationsunterstützungsinformationen an das Endgerät, wobei die ersten Synchronisationsunterstützungsinformationen Synchronisationsunterstützungsinformationen sind, die einer ersten Zelle entsprechen, und die ersten Synchronisationsunterstützungsinformationen Satelliten-Ephemeriden-Informationen, die der ersten Zelle entsprechen, einen gemeinsamen Zeitsteuerungswertparameter, der der ersten Zelle entspricht, erste Epochenzeit-Anzeigeinformationen und eine Dauer eines Zeitgebers, der der ersten Zelle entspricht, umfassen, wobei die ersten Epochenzeit-Anzeigeinformationen dazu ausgelegt sind, eine erste Epochenzeit zu bestimmen, die den ersten Synchronisationsunterstützungsinformationen entspricht, und die erste Zelle keine dienende Zelle des Endgeräts ist;
das Empfangen, durch das Endgerät, der ersten Synchronisationsunterstützungsinformationen; und
das Durchführen, durch das Endgerät, einer Mobilitätsverwaltung an der ersten Zelle auf Grundlage der ersten Synchronisationsunterstützungsinformationen, umfassend: das Bestimmen einer Position einer Gelegenheit zur Messzeitkonfiguration von Synchronisationssignal/physikalischem Rundfunkkanal-Blöcken, SS/PBCH, SMTC, die der ersten Zelle entspricht, auf Grundlage der ersten Synchronisationsunterstützungsinformationen, und das Durchführen einer Funkressourcenverwaltungsmessung, RRM-Messung, an der ersten Zelle auf Grundlage der SMTC-Gelegenheit;
wobei die ersten Epochenzeit-Anzeigeinformationen eine Systemrahmennummer, SFN, und eine Teilrahmennummer angeben, die einem ersten Downlink-Teilrahmen entsprechen, und die erste Epochenzeit eine Anfangs-oder Endzeit des ersten Downlink-Teilrahmens ist;
wobei der erste Downlink-Teilrahmen auf Grundlage einer Downlink-Zeitsteuerung der zweiten Zelle bestimmt wird, wobei die zweite Zelle die dienende Zelle des Endgeräts ist; oder der erste Downlink-Teilrahmen der ersten Zelle entspricht, oder der erste Downlink-Teilrahmen auf Grundlage einer Downlink-Zeitsteuerung der ersten Zelle bestimmt wird.

6. Verfahren nach Anspruch 5, wobei
ein Referenzpunkt der ersten Epochenzeit ein Referenzpunkt der Uplink-Zeitsynchronisation der ersten Zelle ist; oder
ein Referenzpunkt der ersten Epochenzeit ein Referenzpunkt der Uplink-Zeitsynchronisation einer zweiten Zelle ist, wobei die zweite Zelle die dienende Zelle des Endgeräts ist.

7. Verfahren nach Anspruch 5, wobei das Empfangen, durch das Endgerät, der ersten Synchronisationsunterstützungsinformationen umfasst:
das Empfangen der ersten Synchronisationsunterstützungsinformationen über eine Netzwerkvorrichtung einer zweiten Zelle, wobei die zweite Zelle die dienende Zelle des Endgeräts ist.

8. Verfahren nach Anspruch 7, wobei die ersten Synchronisationsunterstützungsinformationen von einer Netzwerkvorrichtung der ersten Zelle an die Netzwerkvorrichtung der zweiten Zelle übertragen werden, wobei die erste Zelle eine Nachbarzelle des Endgeräts ist, oder die erste Zelle eine Zielzelle ist, zu der das Endgerät ein Handover-Verfahren einleitet.

9. Verfahren nach Anspruch 5 oder 6, wobei der gemeinsame Zeitsteuerungswertparameter, der der ersten Zelle entspricht, mindestens eines von einem gemeinsamen Zeitsteuerungswert, einem Driftwert des gemeinsamen Zeitsteuerungswerts, oder einer Änderungsrate des Driftwerts des gemeinsamen Zeitsteuerungswerts umfasst; wobei die Satelliten-Ephemeriden-Informationen, die der ersten Zelle entsprechen, in einem ersten Format, in einem zweiten Format, oder in beiden, dem ersten und dem zweiten Format, vorliegen; wobei
die Satelliten-Ephemeriden-Informationen, die der ersten Zelle entsprechen, im ersten Format umfassen: einen X-Achsen-Parameter einer Position eines Satelliten, der der ersten Zelle entspricht, einen Y-Achsen-Parameter der Position des Satelliten, der der ersten Zelle entspricht, einen Z-Achsen-Parameter der Position des Satelliten, der der ersten Zelle entspricht, einen X-Achsen-Parameter einer Geschwindigkeit des Satelliten, der der ersten Zelle entspricht, einen Y-Achsen-Parameter der Geschwindigkeit des Satelliten, der der ersten Zelle entspricht, und einen Z-Achsen-Parameter der Geschwindigkeit des Satelliten, der der ersten Zelle entspricht; und
die Satelliten-Ephemeriden-Informationen, die der ersten Zelle entsprechen, im zweiten Format umfassen: eine große Halbachse des Satelliten, der der ersten Zelle entspricht, eine Exzentrizität des Satelliten, der der ersten Zelle entspricht, ein Argument der Periapsis des Satelliten, der der ersten Zelle entspricht, eine Länge eines aufsteigenden Knotens des Satelliten, der der ersten Zelle entspricht, eine Inklination des Satelliten, der der ersten Zelle entspricht, und eine mittlere Anomalie des Satelliten, der der ersten Zelle entspricht, zur ersten Epochenzeit.

10. Vorrichtung (600) zur drahtlosen Kommunikation, wobei die Vorrichtung ein Endgerät ist, umfassend:
ein Empfangsmodul (610), das dazu ausgelegt ist, erste Synchronisationsunterstützungsinformationen zu empfangen, wobei die ersten Synchronisationsunterstützungsinformationen Synchronisationsunterstützungsinformationen sind, die einer ersten Zelle entsprechen, und die ersten Synchronisationsunterstützungsinformationen Satelliten-Ephemeriden-Informationen, die der ersten Zelle entsprechen, einen gemeinsamen Zeitsteuerungswertparameter, der der ersten Zelle entspricht, erste Epochenzeit-Anzeigeinformationen und eine Dauer eines Zeitgebers, der der ersten Zelle entspricht, umfassen, wobei die ersten Epochenzeit-Anzeigeinformationen dazu ausgelegt sind, eine erste Epochenzeit zu bestimmen, die den ersten Synchronisationsunterstützungsinformationen entspricht, und die erste Zelle keine dienende Zelle eines Endgeräts ist; und
ein Verarbeitungsmodul (620), das dazu ausgelegt ist, eine Mobilitätsverwaltung an der ersten Zelle auf Grundlage der ersten Synchronisationsunterstützungsinformationen durchzuführen;
wobei das Verarbeitungsmodul (620) dazu ausgelegt ist:
eine Position einer Gelegenheit zur Messzeitkonfiguration von Synchronisationssignal/physikalischem Rundfunkkanal-Blöcken, SS/PBCH, SMTC, die der ersten Zelle entspricht, auf Grundlage der ersten Synchronisationsunterstützungsinformationen zu bestimmen, und eine Funkressourcenverwaltungsmessung, RRM-Messung, an der ersten Zelle auf Grundlage der SMTC-Gelegenheit durchzuführen;
wobei die ersten Epochenzeit-Anzeigeinformationen eine Systemrahmennummer, SFN, und eine Teilrahmennummer angeben, die einem ersten Downlink-Teilrahmen entsprechen, und die erste Epochenzeit eine Anfangs- oder Endzeit des ersten Downlink-Teilrahmens ist;
wobei der erste Downlink-Teilrahmen auf Grundlage einer Downlink-Zeitsteuerung der zweiten Zelle bestimmt wird, wobei die zweite Zelle die dienende Zelle des Endgeräts ist; oder der erste Downlink-Teilrahmen der ersten Zelle entspricht, oder der erste Downlink-Teilrahmen auf Grundlage einer Downlink-Zeitsteuerung der ersten Zelle bestimmt wird.

11. Vorrichtung (600) nach Anspruch 10, wobei das Empfangsmodul (610) dazu ausgelegt ist:
die ersten Synchronisationsunterstützungsinformationen über eine Netzwerkvorrichtung der zweiten Zelle zu empfangen, wobei zweite Zelle die dienende Zelle des Endgeräts ist.

12. Vorrichtung (600) nach Anspruch 11, wobei die ersten Synchronisationsunterstützungsinformationen von einer Netzwerkvorrichtung der ersten Zelle an die Netzwerkvorrichtung der zweiten Zelle übertragen werden, wobei die erste Zelle eine Nachbarzelle des Endgeräts ist, oder die erste Zelle eine Zielzelle ist, zu der das Endgerät das Handover-Verfahren einleitet.

13. Vorrichtung (600) nach Anspruch 10, wobei das Verarbeitungsmodul (620) dazu ausgelegt ist:
Uplink-Zeitvorlaufinformationen, die der ersten Zelle entsprechen, auf Grundlage der ersten Synchronisationsunterstützungsinformationen zu bestimmen, und das Handover-Verfahren zu der ersten Zelle auf Grundlage der Uplink-Zeitvorlaufinformationen, die der ersten Zelle entsprechen, einzuleiten.

14. System zur drahtlosen Kommunikation, wobei das System ein Sendemodul einer Netzwerkvorrichtung umfasst, und ein Empfangsmodul und ein Verarbeitungsmodul eines Endgeräts, wobei:
das Sendemodul dazu ausgelegt ist, erste Synchronisationsunterstützungsinformationen an ein Endgerät zu übertragen, wobei die ersten Synchronisationsunterstützungsinformationen Synchronisationsunterstützungsinformationen sind, die einer ersten Zelle entsprechen, und die ersten Synchronisationsunterstützungsinformationen Satelliten-Ephemeriden-Informationen, die der ersten Zelle entsprechen, einen gemeinsamen Zeitsteuerungswertparameter, der der ersten Zelle entspricht, erste Epochenzeit-Anzeigeinformationen und eine Dauer eines Zeitgebers, der der ersten Zelle entspricht, umfassen, wobei die ersten Epochenzeit-Anzeigeinformationen dazu ausgelegt sind, eine erste Epochenzeit zu bestimmen, die den ersten Synchronisationsunterstützungsinformationen entspricht, und die erste Zelle keine dienende Zelle des Endgeräts ist;
das Empfangsmodul dazu ausgelegt ist, erste Synchronisationsunterstützungsinformationen zu empfangen; und
das Verarbeitungsmodul dazu ausgelegt ist, eine Mobilitätsverwaltung an der ersten Zelle auf Grundlage der ersten Synchronisationsunterstützungsinformationen durchzuführen;
das Verarbeitungsmodul ferner dazu ausgelegt ist:
eine Position einer Gelegenheit zur Messzeitkonfiguration von Synchronisationssignal/physikalischem Rundfunkkanal-Blöcken, SS/PBCH, SMTC, die der ersten Zelle entspricht, auf Grundlage der ersten Synchronisationsunterstützungsinformationen zu bestimmen, und eine Funkressourcenverwaltungsmessung, RRM-Messung, an der ersten Zelle auf Grundlage der SMTC-Gelegenheit durchzuführen;
wobei die ersten Epochenzeit-Anzeigeinformationen eine Systemrahmennummer, SFN, und eine Teilrahmennummer angeben, die einem ersten Downlink-Teilrahmen entsprechen, und die erste Epochenzeit eine Anfangs- oder Endzeit des ersten Downlink-Teilrahmens ist;
wobei der erste Downlink-Teilrahmen auf Grundlage einer Downlink-Zeitsteuerung der zweiten Zelle bestimmt wird, wobei die zweite Zelle die dienende Zelle des Endgeräts ist; oder der erste Downlink-Teilrahmen der ersten Zelle entspricht, oder der erste Downlink-Teilrahmen auf Grundlage einer Downlink-Zeitsteuerung der ersten Zelle bestimmt wird.

## Revendications

1. Procédé de communication sans fil, comprenant :
la réception (510), par un équipement terminal, de premières informations d'assistance à la synchronisation, dans lequel les premières informations d'assistance à la synchronisation sont des informations d'assistance à la synchronisation correspondant à une première cellule, et les premières informations d'assistance à la synchronisation comprennent des informations d'éphémérides de satellite correspondant à la première cellule, un paramètre de valeur de temporisation commune correspondant à la première cellule, des premières informations d'indication de temps époque, et une durée d'un temporisateur correspondant à la première cellule, dans lequel les premières informations d'indication de temps époque sont configurées pour déterminer un premier temps époque correspondant aux premières informations d'assistance à la synchronisation, et la première cellule n'est pas une cellule de desserte de l'équipement terminal ; et
la réalisation (520), par l'équipement terminal, d'une gestion de mobilité sur la première cellule sur la base des premières informations d'assistance à la synchronisation, comprenant :
la détermination d'une position d'une occasion de configuration temporelle de mesure de bloc de signal de synchronisation, SS/canal de diffusion physique, PBCH, SMTC, correspondant à la première cellule sur la base des premières informations d'assistance à la synchronisation, et la réalisation d'une mesure de gestion des ressources radio, RRM, sur la première cellule sur la base de l'occasion SMTC ;
dans lequel les premières informations d'indication de temps époque indiquent un numéro de trame système, SFN, et un numéro de sous-trame qui correspondent à une première sous-trame de liaison descendante, et le premier temps époque est un temps de début ou de fin de la première sous-trame de liaison descendante ;
dans lequel la première sous-trame de liaison descendante est déterminée sur la base d'une temporisation de liaison descendante de la deuxième cellule, dans lequel la deuxième cellule est la cellule de desserte de l'équipement terminal ; ou la première sous-trame de liaison descendante correspond à la première cellule, ou la première sous-trame de liaison descendante est déterminée sur la base d'une temporisation de liaison descendante de la première cellule.

2. Procédé selon la revendication 1, dans lequel
un point de référence du premier temps époque est un point de référence de synchronisation temporelle de liaison montante de la première cellule ; ou
un point de référence du premier temps époque est un point de référence de synchronisation temporelle de liaison montante d'une deuxième cellule, dans lequel la deuxième cellule est la cellule de desserte de l'équipement terminal.

3. Procédé selon la revendication 1, dans lequel la réception (510), par l'équipement terminal, des premières informations d'assistance à la synchronisation comprend :
la réception des premières informations d'assistance à la synchronisation par l'intermédiaire d'un dispositif réseau d'une deuxième cellule, dans lequel la deuxième cellule est la cellule de desserte de l'équipement terminal.

4. Procédé selon la revendication 3, dans lequel les premières informations d'assistance à la synchronisation sont transmises par un dispositif réseau de la première cellule au dispositif réseau de la deuxième cellule, dans lequel la première cellule est une cellule voisine de l'équipement terminal, ou la première cellule est une cellule cible vers laquelle l'équipement terminal engage une procédure de transfert.

5. Procédé de communication sans fil, le procédé étant réalisé par un équipement terminal et un dispositif réseau, le procédé comprenant :
la transmission, par le dispositif réseau, de premières informations d'assistance à la synchronisation à l'équipement terminal, dans lequel les premières informations d'assistance à la synchronisation sont des informations d'assistance à la synchronisation correspondant à une première cellule, et les premières informations d'assistance à la synchronisation comprennent des informations d'éphémérides de satellite correspondant à la première cellule, un paramètre de valeur de temporisation commune correspondant à la première cellule, des premières informations d'indication de temps époque, et une durée d'un temporisateur correspondant à la première cellule, dans lequel les premières informations d'indication de temps époque sont configurées pour déterminer un premier temps époque correspondant aux premières informations d'assistance à la synchronisation, et la première cellule n'est pas une cellule de desserte de l'équipement terminal ;
la réception, par l'équipement terminal, des premières informations d'assistance à la synchronisation ; et
la réalisation, par l'équipement terminal, d'une gestion de mobilité sur la première cellule sur la base des premières informations d'assistance à la synchronisation, comprenant : la détermination d'une position d'une occasion de configuration temporelle de mesure de bloc de signal de synchronisation, SS/canal de diffusion physique, PBCH, SMTC, correspondant à la première cellule sur la base des premières informations d'assistance à la synchronisation, et la réalisation d'une mesure de gestion des ressources radio, RRM, sur la première cellule sur la base de l'occasion SMTC ;
dans lequel les premières informations d'indication de temps époque indiquent un numéro de trame système, SFN, et un numéro de sous-trame qui correspondent à une première sous-trame de liaison descendante, et le premier temps époque est un temps de début ou de fin de la première sous-trame de liaison descendante ;
dans lequel la première sous-trame de liaison descendante est déterminée sur la base d'une temporisation de liaison descendante de la deuxième cellule, dans lequel la deuxième cellule est la cellule de desserte de l'équipement terminal ; ou la première sous-trame de liaison descendante correspond à la première cellule, ou la première sous-trame de liaison descendante est déterminée sur la base d'une temporisation de liaison descendante de la première cellule.

6. Procédé selon la revendication 5, dans lequel
un point de référence du premier temps époque est un point de référence de synchronisation temporelle de liaison montante de la première cellule ; ou
un point de référence du premier temps époque est un point de référence de synchronisation temporelle de liaison montante d'une deuxième cellule, dans lequel la deuxième cellule est la cellule de desserte de l'équipement terminal.

7. Procédé selon la revendication 5, dans lequel la réception, par l'équipement terminal, des premières informations d'assistance à la synchronisation comprend :
la réception des premières informations d'assistance à la synchronisation par l'intermédiaire d'un dispositif réseau d'une deuxième cellule, dans lequel la deuxième cellule est la cellule de desserte de l'équipement terminal.

8. Procédé selon la revendication 7, dans lequel les premières informations d'assistance à la synchronisation sont transmises par un dispositif réseau de la première cellule au dispositif réseau de la deuxième cellule, dans lequel la première cellule est une cellule voisine de l'équipement terminal, ou la première cellule est une cellule cible vers laquelle l'équipement terminal engage une procédure de transfert.

9. Procédé selon la revendication 5 ou 6, dans lequel le paramètre de valeur de temporisation commune correspondant à la première cellule comprend au moins un élément parmi une valeur de temporisation commune, une valeur de dérive de la valeur de temporisation commune, ou un taux de variation de la valeur de dérive de la valeur de temporisation commune ; dans lequel les informations d'éphémérides de satellite correspondant à la première cellule sont dans un premier format, dans un deuxième format, ou dans les premier et deuxième formats ; dans lequel
les informations d'éphémérides de satellite correspondant à la première cellule dans le premier format comprennent : un paramètre d'axe X d'une position d'un satellite correspondant à la première cellule, un paramètre d'axe Y de la position du satellite correspondant à la première cellule, un paramètre d'axe Z de la position du satellite correspondant à la première cellule, un paramètre d'axe X d'une vitesse du satellite correspondant à la première cellule, un paramètre d'axe Y de la vitesse du satellite correspondant à la première cellule, et un paramètre d'axe Z de la vitesse du satellite correspondant à la première cellule ; et
les informations d'éphémérides de satellite correspondant à la première cellule dans le deuxième format comprennent : un demi-grand axe du satellite correspondant à la première cellule, une excentricité du satellite correspondant à la première cellule, un argument du périapse du satellite correspondant à la première cellule, une longitude d'un nœud ascendant du satellite correspondant à la première cellule, une inclinaison du satellite correspondant à la première cellule, et une anomalie moyenne du satellite correspondant à la première cellule au premier temps époque.

10. Appareil (600) pour une communication sans fil, l'appareil étant un équipement terminal, comprenant :
un module de réception (610), configuré pour recevoir des premières informations d'assistance à la synchronisation, dans lequel les premières informations d'assistance à la synchronisation sont des informations d'assistance à la synchronisation correspondant à une première cellule, et les premières informations d'assistance à la synchronisation comprennent des informations d'éphémérides de satellite correspondant à la première cellule, un paramètre de valeur de temporisation commune correspondant à la première cellule, des premières informations d'indication de temps époque, et une durée d'un temporisateur correspondant à la première cellule, dans lequel les premières informations d'indication de temps époque sont configurées pour déterminer un premier temps époque correspondant aux premières informations d'assistance à la synchronisation, et la première cellule n'est pas une cellule de desserte d'un équipement terminal ; et
un module de traitement (620), configuré pour réaliser une gestion de mobilité sur la première cellule sur la base des premières informations d'assistance à la synchronisation ;
dans lequel le module de traitement (620) est configuré pour :
déterminer une position d'une occasion de configuration temporelle de mesure de bloc de signal de synchronisation, SS/canal de diffusion physique, PBCH, SMTC, correspondant à la première cellule sur la base des premières informations d'assistance à la synchronisation, et réaliser une mesure de gestion des ressources radio, RRM, sur la première cellule sur la base de l'occasion SMTC ;
dans lequel les premières informations d'indication de temps époque indiquent un numéro de trame système, SFN, et un numéro de sous-trame qui correspondent à une première sous-trame de liaison descendante, et le premier temps époque est un temps de début ou de fin de la première sous-trame de liaison descendante ;
dans lequel la première sous-trame de liaison descendante est déterminée sur la base d'une temporisation de liaison descendante de la deuxième cellule, dans lequel la deuxième cellule est la cellule de desserte de l'équipement terminal ; ou la première sous-trame de liaison descendante correspond à la première cellule, ou la première sous-trame de liaison descendante est déterminée sur la base d'une temporisation de liaison descendante de la première cellule.

11. Appareil (600) selon la revendication 10, dans lequel le module de réception (610) est configuré pour :
recevoir les premières informations d'assistance à la synchronisation par l'intermédiaire d'un dispositif réseau de la deuxième cellule, dans lequel deuxième cellule est la cellule de desserte de l'équipement terminal.

12. Appareil (600) selon la revendication 11, dans lequel les premières informations d'assistance à la synchronisation sont transmises par un dispositif réseau de la première cellule au dispositif réseau de la deuxième cellule, dans lequel la première cellule est une cellule voisine de l'équipement terminal, ou la première cellule est une cellule cible vers laquelle l'équipement terminal engage la procédure de transfert.

13. Appareil (600) selon la revendication 10, dans lequel le module de traitement (620) est configuré pour :
déterminer des informations d'avance temporelle de liaison montante correspondant à la première cellule sur la base des premières informations d'assistance à la synchronisation, et engager la procédure de transfert vers la première cellule sur la base des informations d'avance temporelle de liaison montante correspondant à la première cellule.

14. Système de communication sans fil, le système comprenant un module d'émission d'un dispositif réseau, et un module de réception et un module de traitement d'un équipement terminal, dans lequel :
le module d'émission est configuré pour transmettre des premières informations d'assistance à la synchronisation à un équipement terminal, dans lequel les premières informations d'assistance à la synchronisation sont des informations d'assistance à la synchronisation correspondant à une première cellule, et les premières informations d'assistance à la synchronisation comprennent des informations d'éphémérides de satellite correspondant à la première cellule, un paramètre de valeur de temporisation commune correspondant à la première cellule, des premières informations d'indication de temps époque, et une durée d'un temporisateur correspondant à la première cellule, dans lequel les premières informations d'indication de temps époque sont configurées pour déterminer un premier temps époque correspondant aux premières informations d'assistance à la synchronisation, et la première cellule n'est pas une cellule de desserte de l'équipement terminal ;
le module de réception est configuré pour recevoir des premières informations d'assistance à la synchronisation ; et
le module de traitement est configuré pour réaliser une gestion de mobilité sur la première cellule sur la base des premières informations d'assistance à la synchronisation ;
le module de traitement est en outre configuré pour :
déterminer une position d'une occasion de configuration temporelle de mesure de bloc de signal de synchronisation, SS/canal de diffusion physique, PBCH, SMTC, correspondant à la première cellule sur la base des premières informations d'assistance à la synchronisation, et réaliser une mesure de gestion des ressources radio, RRM, sur la première cellule sur la base de l'occasion SMTC ;
dans lequel les premières informations d'indication de temps époque indiquent un numéro de trame système, SFN, et un numéro de sous-trame qui correspondent à une première sous-trame de liaison descendante, et le premier temps époque est un temps de début ou de fin de la première sous-trame de liaison descendante ;
dans lequel la première sous-trame de liaison descendante est déterminée sur la base d'une temporisation de liaison descendante de la deuxième cellule, dans lequel la deuxième cellule est la cellule de desserte de l'équipement terminal ; ou la première sous-trame de liaison descendante correspond à la première cellule, ou la première sous-trame de liaison descendante est déterminée sur la base d'une temporisation de liaison descendante de la première cellule.
